(19) Europäisches Patentamt / European Patent Office / Office européen des brevets

(11) **EP 4 786 439 A1**

(12) **EUROPEAN PATENT APPLICATION**
published in accordance with Art. 153(4) EPC

(43) Date of publication:
**05.08.2026  Bulletin 2026/32**

(21) Application number: **24872085.6**

(22) Date of filing: **20.09.2024**

(51) International Patent Classification (IPC):
**C04B 35/486** (2006.01)     **C01G 25/00** (2006.01)
**C01G 25/02** (2006.01)

(52) Cooperative Patent Classification (CPC):
**C01G 25/00; C01G 25/02; C04B 35/486**

(86) International application number:
**PCT/JP2024/033652**

(87) International publication number:
**WO 2025/070294 (03.04.2025 Gazette 2025/14)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **29.09.2023  JP 2023169449**

(71) Applicant: **Daiichi Kigenso Kagaku Kogyo Co., Ltd.**
**Osaka-shi, Osaka 541-0041 (JP)**

(72) Inventors:
• **TAKAI,Masayuki**
  **Osaka-shi, Osaka 559-0025 (JP)**
• **TAKEDA,Satoshi**
  **Osaka-shi, Osaka 559-0025 (JP)**

(74) Representative: **Cabinet Beau de Loménie**
**103, rue de Grenelle / CS 90800**
**75340 Paris Cedex 07 (FR)**

(54) **ZIRCONIA SINTERED BODY, PRODUCTION METHOD FOR ZIRCONIA SINTERED BODY, AND ZIRCONIA POWDER**

(57)    Provided is a zirconia sintered body comprising stabilized zirconia containing zirconia and a stabilizer, wherein: the stabilizer contains CaO; the CaO content in the stabilized zirconia is 4.5-12 mol% in terms of oxides; the average crystal grain size is not more than 90 nm; the monoclinic phase ratio is not more than 2%; the tetragonal phase ratio is 20-97%; the cubic phase ratio is 3-80%; and the relative sintered density is not less than 99%.

Fig.1

EP 4 786 439 A1

**Description**

TECHNICAL FIELD

The present invention relates to a zirconia sintered body, a method for producing a zirconia sintered body, and a zirconia powder.

BACKGROUND ART

Zirconia is used for various purposes by taking advantage of its mechanical strength, translucency, refractive index, etc.

Patent Document 1 discloses a zirconia powder that comprises a stabilizer, and has a specific surface area of 20 $m^2$/g or more and 60 $m^2$/g or less, and a particle diameter $D_{50}$ of 0.1 $\mu$m or more and 0.7 $\mu$m or less, in which in a range of 10 nm or more and 200 nm or less in a pore distribution based on a mercury intrusion method, a peak top diameter of a pore volume distribution is 20 nm or more and 85 nm or less, a pore volume is 0.2 ml/g or more and less than 0.5 ml/g, and a pore distribution width is 40 nm or more and 105 nm or less (see Claim 1). Patent Document 1 discloses that the powder can be sintered at a low temperature and can afford a sintered body having a high sintering density (see paragraph[0047]). In addition, in Examples is disclosed the fact that a zirconia sintered body containing 10.6 mol% of CaO as a stabilizer had a total light transmittance at a thickness of 1 mm of 40% (paragraph[0177] and Table 4 in paragraph[0181]).

PRIOR ART DOCUMENT

PATENT DOCUMENT

Patent Document 1: WO 2022/075345 A

SUMMARY OF THE INVENTION

PROBLEMS TO BE SOLVED BY THE INVENTION

As described above, Patent Document 1 discloses a zirconia sintered body containing CaO as a stabilizer, the zirconia sintered body having a total light transmittance at a thickness of 1 mm of 40%, and if the translucency thereof can be further improved, the usefulness thereof is enhanced. In addition, as shown in Comparative Examples of the present description, the zirconia sintered bodies of Examples of Patent Document 1 have low parallel light transmittance and cannot be said to have transparency.

The present invention has been devised in view of the above-described problems, and an object of the present invention is to provide a zirconia sintered body containing CaO as a stabilizer, the zirconia sintered body having sufficient mechanical properties and being superior in translucency and transparency. Another object of the present invention is to provide a method for producing the zirconia sintered body. Still another object of the present invention is to provide a zirconia powder from which the zirconia sintered body can be obtained.

MEANS FOR SOLVING THE PROBLEMS

The present inventors have intensively studied to achieve the objects. As a result, the present inventors have found that the above problems can be solved by employing the following configuration, and have accomplished the present invention.

The present invention provides the following.

[1] A zirconia sintered body comprising stabilized zirconia containing zirconia and a stabilizer, wherein

the stabilizer contains CaO,
a content of the CaO in the stabilized zirconia is 4.5 mol% or more and 12 mol% or less in terms of oxide, and
the zirconia sintered body has:

an average crystal grain diameter of 90 nm or less,
a monoclinic phase fraction of 2% or less,
a tetragonal phase fraction of 20% or more and 97% or less,
a cubic phase fraction of 3% or more and 80% or less, and

a relative sintered density of 99% or more.

According to the configuration, since the content of the CaO in the stabilized zirconia is 4.5 mol% or more in terms of oxide, the monoclinic phase fraction can be 2% or less.

Since the content of the CaO in the stabilized zirconia is 4.5 mol% or more in terms of oxide and 12 mol% or less in terms of oxide, the tetragonal phase fraction can be 20% or more and 97% or less, and the cubic phase fraction can be 3% or more and 80% or less.

When the content of CaO is in the range of 4.5 mol% or more and 12 mol% or less in terms of oxide, the tetragonal phase fraction and the cubic phase fraction are in a trade-off relationship, and the higher the content of CaO is, the higher the cubic phase fraction is whereas the lower the tetragonal phase fraction is. The lower the content of CaO is, the higher the tetragonal phase fraction is whereas the lower the cubic phase fraction is.

According to Y. Zhang, Dent Mater., 2014, 30 (10), 1195-1203 (THE JOURNAL OF JAPANESE SOCIETY FOR DENTAL MATERIALS AND DEVICES), setting the crystal grain diameter to 50 nm to 110 nm makes it possible to apply the Rayleigh scattering model. In the region of Rayleigh scattering, since the intensity of scattered light is proportional to the sixth power of the grain diameter, scattering at grain boundaries is suppressed as the crystal grain diameter is reduced. According to the configuration, since the average crystal grain diameter is 90 nm or less, Rayleigh scattering can be suppressed and the zirconia sintered body can have high translucency and high transparency.

The more the monoclinic phase is contained, the lower the mechanical properties and transparency are. According to the configuration, since the monoclinic phase fraction is 2% or less, the zirconia sintered body is superior in mechanical properties and transparency.

In addition, the more the tetragonal phase is contained, the more the mechanical properties are improved. According to the configuration, since the tetragonal phase fraction is 20% or more, the zirconia sintered body is superior in mechanical properties. When the average crystal grain diameter is large (that is, when the average crystal grain diameter is greater than 90 nm), the parallel light transmittance (transparency) decreases due to the presence of the tetragonal phase. According to the configuration, however, since the average crystal grain diameter is as small as 90 nm or less (that is, the Rayleigh scattering model can be applied), the parallel light transmittance can be maintained high even when there are many tetragonal phases. Therefore, even when the upper limit of the tetragonal phase fraction is 97%, the parallel light transmittance can be maintained high.

In addition, since cubic phases do not have optical anisotropy (have optical isotropy), when the cubic phase fraction is increased, the total light transmittance (translucency) and the parallel light transmittance (transparency) are increased. On the other hand, since cubic phases have a characteristic of being easily grown, if the cubic phase fraction is excessively high, crystal grains become large, and the parallel light transmittance (transparency) decreases. Therefore, according to the configuration, since the cubic phase fraction is 3% or more, the total light transmittance and the parallel light transmittance can be increased. In addition, since the cubic phase fraction is 80% or less, the grain growth can be suppressed, and the parallel light transmittance can be maintained high.

In addition, according to the configuration, since the relative sintered density is 99% or more, it can be said that the zirconia sintered body has high strength.

As described above, according to the configuration, it is possible to provide a zirconia sintered body having sufficient mechanical properties and being superior in translucency and transparency.

Furthermore, the present invention provides the following.

[2] The zirconia sintered body according to [1], wherein $Al_2O_3$ is contained in an amount of 0.40 mass% or less relative to an entire amount of the zirconia sintered body.

When $Al_2O_3$ is contained throughout the zirconia sintered body, the $Al_2O_3$ functions as a sintering aid, and thus the zirconia sintered body is superior in low-temperature sinterability. In addition, when the content of the $Al_2O_3$ is 0.40 mass% or less, scattering by precipitated phases (grain boundaries) of alumina (an impurity) is reduced, so that translucency and transparency can be maintained high.

Furthermore, the present invention provides the following.

[3] The zirconia sintered body according to [1] or [2], which has a total light transmittance at a thickness of 1 mm of 40% or more and 50% or less.

When the total light transmittance at a thickness of 1 mm is 40% or more, it can be said that the zirconia sintered body is further superior in translucency.

Furthermore, the present invention provides the following.

[4] The zirconia sintered body according to any one of [1] to [3], which has a parallel light transmittance at a thickness of 1 mm of 1% or more and 15% or less.

When the parallel light transmittance at a thickness of 1 mm is 1% or more, it can be said that the zirconia sintered body is further superior in transparency.

Furthermore, the present invention provides the following.

[5] The zirconia sintered body according to any one of [1] to [4], which has a three-point bending strength of 300 MPa or more and 1500 MPa or less.

When the three-point bending strength is 300 MPa or more, it can be said that the zirconia sintered body has high strength.

Furthermore, the present invention provides the following.

[6] The zirconia sintered body according to any one of [1] to [5], which has a toughness value as measured by an IF method of 3 MPa·m$^{0.5}$ or more and 15 MPa·m$^{0.5}$ or less.

When the toughness value as measured by an IF method is 3 MPa·m$^{0.5}$ or more, toughness can be regarded as being high.

Furthermore, the present invention provides the following.

[7] A method for producing the zirconia sintered body according to any one of [1] to [6], the method comprising:

step A of molding a zirconia powder with a pressure of 1.0 t/cm$^2$ or more and 2.5 t/cm$^2$ or less to obtain a molded body;
step B of pre-sintering the molded body under ordinary pressure at 1150°C or higher and 1250°C or lower for 1 hour or more and 5 hours or less to obtain a pre-sintered body; and
step C of finally sintering the pre-sintered body under a pressure of 50 MPa or more and 200 MPa or less at 1150°C or higher and 1250°C or lower for 1 hour or more and 5 hours or less to obtain a sintered body.

According to the configuration, since the molded body is pre-sintered under relatively low temperature conditions, namely, under ordinary pressure at 1150°C or higher and 1250°C or lower for 1 hour or more and 5 hours or less, a pre-sintered body in which grain growth is suppressed can be obtained. Since the grain growth is suppressed, it is possible to suppress Rayleigh scattering and to obtain a zirconia sintered body having high translucency and high transparency.
According to the configuration, since the molded body is pre-sintered under ordinary pressure at 1150°C or higher and 1250°C or lower for 1 hour or more and 5 hours or less, the particles of the zirconia powder are moderately bonded to each other in the process of pre-sintering, and the pores (interparticle spaces of the zirconia powder) in the molded body can be made into closed pores. That is, the pre-sintering can change pores from a state in which the pores are interconnected to each other (open pores) to isolated closed pores surrounded by aggregates of the zirconia powder.
Then, since the pre-sintered body in which the pores are closed pores is finally sintered under a pressure of 50 MPa or more and 200 MPa or less at 1150°C or higher and 1250°C or lower for 1 hour or more and 5 hours or less, the closed pores can be almost eliminated. Specifically, by making closed pores as small as possible by compressing the closed pores through pressurization of the final sintering, and by pushing pores out of the sintered body through element diffusion (element flow) during the final sintering, the closed pores can be almost completely eliminated. The total light transmittance (translucency) and the parallel light transmittance (transparency) can be improved by removing the pores.
When the pores are not closed pores in the pre-sintered body, the pores are not removed even when the final sintering is performed under a pressure of 50 MPa or more and 200 MPa or less at 1150°C or higher and 1250°C or lower for 1 hour or more and 5 hours or less. This is because, in the pre-sintered body, if the pores are not closed pores, pressure is less likely to be transmitted to the pores during the final sintering.
Whether or not the pores are closed pores in the pre-sintered body can be determined from whether or not the relative sintered density can be measured by the Archimedes method. When the pores are open pores, the pores absorb water during measurement, so that the relative sintered density cannot be measured (the measured value will be abnormal). That is, when the relative sintered density can be measured (a value within an assumed range is obtained), it can be determined that the pores are closed pores.
In the present description, the pre-sintered body refers to a sintered body having a relative sintered density of 92% or more and less than 99%. In addition, in the present description, pre-sintering means performing sintering such that the relative sintered density of the sintered body falls within the range of 92% or more and less than 99%.

Furthermore, the present invention provides the following.

[8] The method for producing the zirconia sintered body according to [7], wherein

the zirconia powder contains stabilized zirconia containing zirconia and a stabilizer,
the stabilizer containing CaO, and
the stabilizer having a content of the CaO in the stabilized zirconia of 4.5 mol% or more and 12 mol% or less in terms of oxide,
the zirconia powder has a specific surface area of 20 $m^2$/g or more and 80 $m^2$/g or less, and
a peak top diameter of 20 nm or more and 100 nm or less in a pore volume distribution in a range of 10 nm or more and 200 nm or less in a pore distribution based on a mercury intrusion method, and
when the zirconia powder is molded with a pressure of 2.0 $t/cm^2$ using cold isostatic pressing, a relative molding density of 40% or more and 48% or less is attained.

According to the configuration, since the specific surface area is 20 $m^2$/g or more and 80 $m^2$/g or less, and in a range of 10 nm or more and 200 nm or less in a pore distribution of the zirconia powder based on a mercury intrusion method, a peak top diameter in a pore volume distribution is 20 nm or more and 100 nm or less, when the zirconia powder is molded with a pressure of 2.0 $t/cm^2$ using cold isostatic pressing, a relative molding density of 40% or more and 48% or less can be attained.

In addition, according to the configuration, since a relative molding density of 40% or more and 48% or less is attained when the zirconia powder is molded with a pressure of 2.0 $t/cm^2$ using cold isostatic pressing, when the molded body molded with a pressure of 1.0 $t/cm^2$ or more and 2.5 $t/cm^2$ or less is subjected to the pre-sintering of the step B and the final sintering of the step C, it is possible to obtain a zirconia sintered body having an average crystal grain diameter of 90 nm or less, a monoclinic phase fraction of 2% or less, a tetragonal phase fraction of 20% or more and 97% or less, a cubic phase fraction of 3% or more and 80% or less, and a relative sintered density of 99% or more.

Furthermore, the present invention provides the following.

[9] The method for producing the zirconia sintered body according to [7] or [8], wherein the zirconia powder contains $Al_2O_3$ within a range of 0.40 mass% or less relative to an entire amount of the zirconia powder.

When $Al_2O_3$ is contained throughout the zirconia powder, the $Al_2O_3$ functions as a sintering aid, and thus the zirconia powder is superior in low-temperature sinterability. In addition, when the content of the $Al_2O_3$ is 0.40 mass% or less, scattering by precipitated phases (grain boundaries) of alumina (an impurity) is reduced, so that translucency and transparency can be maintained high.

Furthermore, the present invention provides the following.

[10] A zirconia powder to be used for the method for producing the zirconia sintered body according to any one of [7] to [9],

comprising stabilized zirconia containing zirconia and a stabilizer, wherein
the stabilizer contains CaO, and
a content of the CaO in the stabilized zirconia is 4.5 mol% or more and 12 mol% or less in terms of oxide,
the zirconia powder has a specific surface area of 20 $m^2$/g or more and 80 $m^2$/g or less, and
a peak top diameter of 20 nm or more and 100 nm or less in a pore volume distribution in a range of 10 nm or more and 200 nm or less in a pore distribution based on a mercury intrusion method, and
when the zirconia powder is molded with a pressure of 2.0 $t/cm^2$ using cold isostatic pressing, a relative molding density of 40% or more and 48% or less is attained.

According to the configuration, since the specific surface area is 20 $m^2$/g or more and 80 $m^2$/g or less, and in a range of 10 nm or more and 200 nm or less in a pore distribution of the zirconia powder based on a mercury intrusion method, a peak top diameter in a pore volume distribution is 20 nm or more and 100 nm or less, when the zirconia powder is molded with a pressure of 2.0 $t/cm^2$ using cold isostatic pressing, a relative molding density of 40% or more and 48% or less can be attained.

In addition, according to the configuration, since a relative molding density of 40% or more and 48% or less is attained when the zirconia powder is molded with a pressure of 2.0 $t/cm^2$ using cold isostatic pressing, when the molded body molded with a pressure of 1.0 $t/cm^2$ or more and 2.5 $t/cm^2$ or less is subjected to the pre-sintering of the step B and the final sintering of the step C, it is possible to obtain a zirconia sintered body having an average crystal grain diameter of 90 nm or less, a monoclinic phase fraction of 2% or less, a tetragonal phase fraction of 20% or more and 97% or less, a cubic phase fraction of 3% or more and 80% or less, and a relative sintered density of 99% or more.

Furthermore, the present invention provides the following.

[11] The zirconia powder according to [10], wherein the zirconia powder contains $Al_2O_3$ in an amount of 0.40 mass% or less relative to the entire amount of the zirconia powder.

When $Al_2O_3$ is contained throughout the zirconia powder, the $Al_2O_3$ functions as a sintering aid, and thus the zirconia powder is superior in low-temperature sinterability. In addition, when the content of the $Al_2O_3$ is 0.40 mass% or less, scattering by precipitated phases (grain boundaries) of alumina (an impurity) is reduced, so that translucency and transparency can be maintained high.

Furthermore, the present invention provides the following.

[12] The zirconia sintered body according to any one of [1] to [6], wherein

the stabilizer further contains another stabilizer other than CaO,

the other stabilizer is one or more selected from the group consisting of $YO_{1.5}$, $YbO_{1.5}$, $ErO_{1.5}$, $CeO_2$, $NdO_{1.5}$, $LaO_{1.5}$, and $TbO_{1.5}$, and

a content of the other stabilizer in the stabilized zirconia is 0.01 mol% or more and 6.0 mol% or less in terms of oxide.

In a case where the other stabilizer is $YO_{1.5}$, $YbO_{1.5}$, or $LaO_{1.5}$, when the other stabilizer is contained within the range of 0.01 mol% or more and 6.0 mol% or less in terms of oxide, a white sintered body can be suitably obtained.

In a case where the other stabilizer is $ErO_{1.5}$, when the other stabilizer is contained within the range of 0.01 mol% or more and 6.0 mol% or less in terms of oxide, a pink sintered body can be suitably obtained.

In a case where the other stabilizer is $CeO_2$, when the other stabilizer is contained within the range of 0.01 mol% or more and 6.0 mol% or less in terms of oxide, a yellow sintered body can be suitably obtained.

In a case where the other stabilizer is $TbO_{1.5}$, when the other stabilizer is contained within the range of 0.01 mol% or more and 6.0 mol% or less in terms of oxide, an orange sintered body can be suitably obtained.

In a case where the other stabilizer is $NdO_{1.5}$, when the other stabilizer is contained within the range of 0.01 mol% or more and 6.0 mol% or less in terms of oxide, a violet sintered body can be suitably obtained.

EFFECT OF THE INVENTION

According to the present invention, it is possible to provide a zirconia sintered body which has sufficient mechanical properties and is excellent in translucency and transparency in a zirconia sintered body using CaO as a stabilizer. Further, it is possible to provide a method for producing the zirconia sintered body. Further, it is possible to provide a zirconia powder from which the zirconia sintered body can be obtained.

BRIEF DESCRIPTION OF THE DRAWINGS

Fig. 1 is a schematic diagram for illustrating a method for producing a zirconia powder according to the present embodiment.

Fig. 2 is a schematic diagram for illustrating indentation lengths and crack lengths.

MODE FOR CARRYING OUT THE INVENTION

Hereinafter, embodiments of the present invention will be described. However, the present invention is not limited only to these embodiments. Zirconia (zirconium oxide) as referred to herein is common zirconia and contains impurity metal compounds including hafnia at 10 mass% or less. The terms "comprise" and "contain" used herein include the concepts of "comprise", "contain", "substantially consist of", and "consist of".

The maximum value and minimum value of content of each component shown below should each independently be considered as a preferable minimum value and a preferable maximum value of the present invention regardless of the contents of other components.

Further, the maximum values and the minimum values of various parameters (measured values and the like) shown below should each independently be considered as preferable minimum values and maximum values of the present invention regardless of the content (composition) of each component.

[Zirconia sintered body]

Hereinbelow, an example of a zirconia sintered body according to an embodiment of the present invention will be described. However, the zirconia sintered body of the present invention is not limited to the following example.

The zirconia sintered body according to the present embodiment includes stabilized zirconia containing zirconia and a stabilizer, wherein

the stabilizer contains CaO,
a content of the CaO in the stabilized zirconia is 4.5 mol% or more and 12 mol% or less in terms of oxide, and
the zirconia sintered body has:

an average crystal grain diameter of 90 nm or less,
a monoclinic phase fraction of 2% or less,
a tetragonal phase fraction of 20% or more and 97% or less,
a cubic phase fraction of 3% or more and 80% or less, and
a relative sintered density of 99% or more.

As described above, the zirconia sintered body according to the present embodiment contains stabilized zirconia.

The content of the stabilized zirconia is preferably 70 mass% or more, more preferably 75 mass% or more, still more preferably 80 mass% or more, and particularly preferably 85 mass% or more when the entire amount of the zirconia sintered body is taken as 100 mass%. The content of the stabilized zirconia may be 99 mass% or less, 95 mass% or less, or the like when the entire amount of the zirconia sintered body is taken as 100 mass%. The zirconia sintered body may be composed of only the stabilized zirconia. That is, the zirconia sintered body may be formed by sintering only the stabilized zirconia. In this case, the content of the stabilized zirconia is 100 mass% when the entire amount of the zirconia sintered body is taken as 100 mass%.

The content of the stabilized zirconia is preferably 70 mass% or more and 99 mass% or less, more preferably 75 mass% or more and 95 mass% or less, even more preferably 80 mass% or more and 95 mass% or less, particularly preferably 85 mass% or more and 95 mass% or less when the entire amount of the zirconia sintered body is taken as 100 mass%.

The stabilized zirconia contains zirconia and a stabilizer.

The total content of zirconia and the stabilizer in the stabilized zirconia is preferably 70 mass% or more, and more preferably 80 mass% or more when the entire amount of the stabilized zirconia is taken as 100 mass%. The total content of zirconia and the stabilizer may be 99 mass% or less, 95 mass% or less, or the like when the entire amount of the stabilized zirconia is taken as 100 mass%.

The total content of zirconia and the stabilizer in the stabilized zirconia is preferably 70 mass% or more and 99 mass% or less, and more preferably 80 mass% or more and 95 mass% or less when the entire amount of the stabilized zirconia is taken as 100 mass%.

The stabilized zirconia may be composed of only zirconia and a stabilizer.

The stabilizer includes CaO.

The content of the CaO in the stabilized zirconia is 4.5 mol% or more and 12 mol% or less in terms of oxide.

Since the content of the CaO in the stabilized zirconia is 4.5 mol% or more in terms of oxide, the monoclinic phase fraction can be 2% or less.

Since the content of the CaO in the stabilized zirconia is 4.5 mol% or more in terms of oxide and 12 mol% or less in terms of oxide, the tetragonal phase fraction can be 20% or more and 97% or less, and the cubic phase fraction can be 3% or more and 80% or less.

When the content of CaO is in the range of 4.5 mol% or more and 12 mol% or less in terms of oxide, the tetragonal phase fraction and the cubic phase fraction are in a trade-off relationship, and the higher the content of CaO is, the higher the cubic phase fraction is whereas the lower the tetragonal phase fraction is. The lower the content of CaO is, the higher the tetragonal phase fraction is whereas the lower the cubic phase fraction is.

The content of the CaO in the stabilized zirconia is preferably 4.6 mol% or more, more preferably 4.7 mol% or more, still more preferably 4.8 mol% or more, particularly preferably 4.9 mol% or more, and especially preferably 5.0 mol% or more in terms of oxide.

The content of the CaO in the stabilized zirconia is preferably 11.7 mol% or less, more preferably 11.5 mol% or less, still more preferably 11.3 mol% or less, particularly preferably 11.1 mol% or less, and especially preferably 10.9 mol% or less in terms of oxide.

The content of the CaO in the stabilized zirconia is preferably 4.6 mol% or more and 11.7 mol% or less in terms of oxide, and more preferably 4.7 mol% or more and 11.5 mol% or less in terms of oxide.

The stabilizer may further include another stabilizer other than CaO. The other stabilizer is not particularly limited, and examples thereof include $YO_{1.5}$, $YbO_{1.5}$, $ErO_{1.5}$, $CeO_2$, $NdO_{1.5}$, $LaO_{1.5}$, and $TbO_{1.5}$. These other stabilizers may be contained single or two or more of them may be contained.

When another stabilizer other than CaO is contained, the content thereof is preferably within a range where neither transparency nor translucency is significantly affected.

When another stabilizer other than CaO is contained, the content of the other stabilizer in the stabilized zirconia is preferably 0.01 mol% or more and 6.0 mol% or less in terms of oxide.

The content of the other stabilizer in the stabilized zirconia is more preferably 0.05 mol% or more, and still more preferably 0.10 mol% or more in terms of oxide.

The content of the other stabilizer in the stabilized zirconia is preferably 5.5 mol% or less, and more preferably 5.0 mol% or less in terms of oxide.

The content of the other stabilizer in the stabilized zirconia is more preferably 0.05 mol% or more and 5.5 mol% or less in terms of oxide, and still more preferably 0.10 mol% or more and 5.0 mol% or less in terms of oxide.

When $YO_{1.5}$ is contained as the other stabilizer, the content of $YO_{1.5}$ in the stabilized zirconia is preferably 0.1 mol% or more, more preferably 0.5 mol% or more, and the content is still more preferably 0.6 mol% or more.

When $YO_{1.5}$ is contained as the other stabilizer, the content of $YO_{1.5}$ in the stabilized zirconia is preferably 5.9 mol% or less, and more preferably 5.8 mol% or less.

When $YO_{1.5}$ is contained as the other stabilizer, the content of $YO_{1.5}$ in the stabilized zirconia is preferably 0.1 mol% or more and 5.9 mol% or less, more preferably 0.5 mol% or more and 5.9 mol% or less, and still more preferably 0.6 mol% or more and 5.8 mol% or less.

When $ErO_{1.5}$ is contained as the other stabilizer, the content of $ErO_{1.5}$ in the stabilized zirconia is preferably 0.1 mol% or more, more preferably 0.2 mol% or more, still more preferably 0.4 mol% or more, and particularly preferably 0.42 mol% or more.

When $ErO_{1.5}$ is contained as the other stabilizer, the content of $ErO_{1.5}$ in the stabilized zirconia is preferably 1.5 mol% or less, more preferably 1.0 mol% or less, still more preferably 0.5 mol% or less, and particularly preferably 0.46 mol% or less.

When $ErO_{1.5}$ is contained as the other stabilizer, the content of $ErO_{1.5}$ in the stabilized zirconia is preferably 0.1 mol% or more and 1.5 mol% or less, more preferably 0.2 mol% or more and 1.0 mol% or less, still more preferably 0.4 mol% or more and 0.5 mol% or less, and particularly preferably 0.42 mol% or more and 0.46 mol% or less.

When $CeO_2$ is contained as the other stabilizer, the content of $CeO_2$ in the stabilized zirconia is preferably 0.03 mol% or more, and more preferably 0.05 mol% or more.

When $CeO_2$ is contained as the other stabilizer, the content of $CeO_2$ in the stabilized zirconia is preferably 1.0 mol% or less, more preferably 0.5 mol% or less, still more preferably 0.25 mol% or less, and particularly preferably 0.2 mol% or less.

When $CeO_2$ is contained as the other stabilizer, the content of $CeO_2$ in the stabilized zirconia is preferably 0.03 mol% or more and 1.0 mol% or less, more preferably 0.05 mol% or more and 0.5 mol% or less, still more preferably 0.03 mol% or more and 0.25 mol% or less, and particularly preferably 0.05 mol% or more and 0.2 mol% or less.

When $NdO_{1.5}$ is contained as the other stabilizer, the content of $NdO_{1.5}$ in the stabilized zirconia is preferably 0.05 mol% or more, more preferably 0.1 mol% or more, still more preferably 0.25 mol% or more, and particularly preferably 0.28 mol% or more.

When $NdO_{1.5}$ is contained as the other stabilizer, the content of $NdO_{1.5}$ in the stabilized zirconia is preferably 0.5 mol% or less, more preferably 0.4 mol% or less, preferably 0.35 mol% or less, and more preferably 0.32 mol% or less.

When $NdO_{1.5}$ is contained as the other stabilizer, the content of $NdO_{1.5}$ in the stabilized zirconia is preferably 0.05 mol% or more and 0.5 mol% or less, more preferably 0.1 mol% or more and 0.4 mol% or less, still more preferably 0.25 mol% or more and 0.35 mol% or less, and particularly preferably 0.28 mol% or more and 0.32 mol% or less.

When $LaO_{1.5}$ is contained as the other stabilizer, the content of $LaO_{1.5}$ in the stabilized zirconia is preferably 0.05 mol% or more, more preferably 0.1 mol% or more, still more preferably 0.15 mol% or more, and particularly preferably 0.18 mol% or more.

When $LaO_{1.5}$ is contained as the other stabilizer, the content of $LaO_{1.5}$ in the stabilized zirconia is preferably 1.0 mol% or less, more preferably 0.5 mol% or less, still more preferably 0.25 mol% or less, and particularly preferably 0.22 mol% or less.

When $LaO_{1.5}$ is contained as the other stabilizer, the content of $LaO_{1.5}$ in the stabilized zirconia is preferably 0.05 mol% or more and 1.0 mol% or less, more preferably 0.1 mol% or more and 0.5 mol% or less, still more preferably 0.15 mol% or more and 0.25 mol% or less, and particularly preferably 0.18 mol% or more and 0.22 mol% or less.

When $TbO_{1.5}$ is contained as the other stabilizer, the content of $TbO_{1.5}$ in the stabilized zirconia is preferably 0.05 mol% or more, and more preferably 0.08 mol% or more.

When $TbO_{1.5}$ is contained as the other stabilizer, the content of $TbO_{1.5}$ in the stabilized zirconia is preferably 0.15 mol% or less, and more preferably 0.12 mol% or less.

When $TbO_{1.5}$ is contained as the other stabilizer, the content of $TbO_{1.5}$ in the stabilized zirconia is preferably 0.05 mol% or more and 0.15 mol% or less, and more preferably 0.08 mol% or more and 0.12 mol% or less.

When $YbO_{1.5}$ is contained as the other stabilizer, the content of $YbO_{1.5}$ in the stabilized zirconia is preferably 0.1 mol% or more, more preferably 0.2 mol% or more, still more preferably 1.0 mol% or more, and particularly preferably 1.2 mol% or more.

When $YbO_{1.5}$ is contained as the other stabilizer, the content of $YbO_{1.5}$ in the stabilized zirconia is preferably 3.0 mol% or less, more preferably 2.0 mol% or less, and still more preferably 1.7 mol% or less.

When $YbO_{1.5}$ is contained as the other stabilizer, the content of $YbO_{1.5}$ in the stabilized zirconia is preferably 0.1 mol% or more and 3.0 mol% or less, more preferably 0.2 mol% or more and 2.0 mol% or less, still more preferably 1.0 mol% or more and 2.0 mol% or less, and particularly preferably 1.2 mol% or more and 1.7 mol% or less.

The total amount of the stabilizer in the stabilized zirconia is preferably 4.5 mol% or more and 12.0 mol% or less in terms of oxide. When the total amount of the stabilizer is 4.5 mol% or more in terms of oxide, the monoclinic phase fraction can be further reduced. When the total amount of the stabilizers is 12.0 mol% or less in terms of oxide, the fraction of a cubic phase having low mechanical properties (strength, toughness) can be reduced and the fraction of a tetragonal phase having high mechanical properties can be increased.

The total amount of the stabilizers is more preferably 4.6 mol% or more, still more preferably 4.7 mol% or more, and particularly preferably 4.8 mol% or more in terms of oxide.

The total amount of the stabilizers is more preferably 11.7 mol% or less, still more preferably 11.5 mol% or less, and particularly preferably 11.3 mol% or less in terms of oxide.

The total amount of the stabilizers is more preferably 4.6 mol% or more and 11.7 mol% or less, still more preferably 4.7 mol% or more and 11.5 mol% or less, and particularly preferably 4.8 mol% or more and 11.3 mol% or less in terms of oxide.

The content of zirconia in the stabilized zirconia is preferably 80 mass% or more and 99 mass% or less. The content of zirconia in the stabilized zirconia is more preferably 85 mass% or more, and still more preferably 90 mass% or more. The content of zirconia in the stabilized zirconia is more preferably 98 mass% or less, and still more preferably 97 mass% or less.

The content of zirconia in the stabilized zirconia is more preferably 85 mass% or more and 98 mass% or less, and still more preferably 90 mass% or more and 97 mass% or less.

The zirconia sintered body preferably contains $Al_2O_3$ (alumina) in an amount of 0.40 mass% or less relative to the entire amount of the zirconia sintered body. When $Al_2O_3$ is contained throughout the zirconia sintered body, the $Al_2O_3$ functions as a sintering aid, and thus the zirconia sintered body is superior in low-temperature sinterability. In addition, when the content of the $Al_2O_3$ is 0.40 mass% or less, scattering by precipitated phases (grain boundaries) of alumina (an impurity) is reduced, so that translucency and transparency can be maintained high.

When the zirconia sintered body contains $Al_2O_3$, the content of the $Al_2O_3$ is more preferably 0.01 mass% or more, and still more preferably 0.05 mass% or more.

When the zirconia sintered body contains $Al_2O_3$, the content of the $Al_2O_3$ is more preferably 0.37 mass% or less, and still more preferably 0.35 mass% or less.

When the zirconia sintered body contains $Al_2O_3$, the content of the $Al_2O_3$ is more preferably 0.01 mass% or more and 0.37 mass% or less, and still more preferably 0.05 mass% or more and 0.35 mass% or less.

In addition to alumina, the zirconia sintered body may contain sinterable ceramics, a thermosetting resin, or the like for the purpose of improving properties such as strength.

The zirconia sintered body may contain at least one selected from the group consisting of Fe, V, Mn, Co, Zn, Cu, and Ti as long as neither the transparency nor the translucency is significantly affected. When the zirconia sintered body contains at least one selected from the group consisting of Fe, V, Mn, Co, Zn, Cu, and Ti as a coloring element, the zirconia sintered body can be suitably colored.

The form of the coloring element is not limited, and the coloring element can be added in the form of an oxide, a chloride, or the like. Examples of a colorant containing the coloring element specifically include $Fe_2O_3$, $V_2O_5$, $MnO_2$, CoO, ZnO, CuO, and $TiO_2$.

When $Fe_2O_3$ is contained as the colorant, the content of the colorant is preferably 0.005 mass% or more and 1 mass% or less, and more preferably 0.05 mass% or more and 0.5 mass% or less when the entire amount of the zirconia sintered body is taken as 100 mass%. When the content of the colorant is 0.005 mass% or more, intended coloring is easily achieved. That is, the color tone can be easily adjusted.

When $V_2O_5$ is contained as the colorant, the content thereof is preferably 0.005 mass% or more and 0.5 mass% or less, and more preferably 0.01 mass% or more and 0.1 mass% or less when the entire amount of the zirconia sintered body is taken as 100 mass%. When the content of the colorant is 0.005 mass% or more, intended coloring is easily achieved. That is, the color tone can be easily adjusted.

When $MnO_2$ is contained as the colorant, the content thereof is preferably 0.005 mass% or more and 2 mass% or less, and more preferably 0.1 mass% or more and 1.1 mass% or less when the entire amount of the zirconia sintered body is taken as 100 mass%. When the content of the colorant is 0.005 mass% or more, intended coloring is easily achieved. That is, the color tone can be easily adjusted.

When CoO is contained as the colorant, the content of the colorant is preferably 0.005 mass% or more and 2 mass% or less, and more preferably 0.01 mass% or more and 1.5 mass% or less when the entire amount of the zirconia sintered body is taken as 100 mass%. When the content of the colorant is 0.005 mass% or more, intended coloring is easily achieved. That is, the color tone can be easily adjusted.

When ZnO is contained as the colorant, the content of the colorant is preferably 0.005 mass% or more and 1 mass% or less, and more preferably 0.1 mass% or more and 0.5 mass% or less when the entire amount of the zirconia sintered body is taken as 100 mass%. When the content of the colorant is 0.005 mass% or more, intended coloring is easily achieved. That is, the color tone can be easily adjusted.

When CuO is contained as the colorant, the content of the colorant is preferably 0.005 mass% or more and 1 mass% or less, and more preferably 0.05 mass% or more and 0.6 mass% or less when the entire amount of the zirconia sintered body is taken as 100 mass%. When the content of the colorant is 0.005 mass% or more, intended coloring is easily achieved. That is, the color tone can be easily adjusted.

When $TiO_2$ is contained as the colorant, the content of the colorant is preferably 0.005 mass% or more and 2 mass% or less, more preferably 0.01 mass% or more and 1 mass% or less, and still more preferably 0.1 mass% or more and 0.3 mass% or less when the entire amount of the zirconia sintered body is taken as 100 mass%. When the content of the colorant is 0.005 mass% or more, intended coloring is easily achieved. That is, the color tone can be easily adjusted.

The zirconia sintered body has an average crystal grain diameter of 90 nm or less. Since the average crystal grain diameter is 90 nm or less, Rayleigh scattering can be suppressed and the zirconia sintered body can have high translucency and high transparency.

The average crystal grain diameter is preferably 89 nm or less, and more preferably 87 nm or less.

The average crystal grain diameter is preferably as small as possible, and is, for example, 30 nm or more, or 40 nm or more.

The average crystal grain diameter is preferably 30 nm or more and 89 nm or less, and more preferably 40 nm or more and 87 nm or less.

The average crystal grain diameter can be controlled by, for example, sintering conditions at the time of sintering the zirconia powder.

The average crystal grain diameter is determined by the method described in Examples.

The fraction of the monoclinic phase contained in the crystal phase of the zirconia sintered body is 2% or less. The more the monoclinic phase is contained, the lower the mechanical properties and transparency are. Since the zirconia sintered body has a monoclinic phase fraction of 2% or less, the zirconia sintered body is superior in mechanical properties and transparency.

The monoclinic phase fraction is preferably 1.5% or less, and more preferably 1.0% or less.

The monoclinic phase fraction is preferably as low as possible, and is, for example, 0.1% or more, or 0.2% or more.

The monoclinic phase fraction is preferably 0.1% or more and 1.5% or less, and more preferably 0.1% or more and 1.0% or less.

The monoclinic phase fraction can be controlled by, for example, the content of a stabilizer (in particular, CaO).

The monoclinic phase fraction is determined by the method described in Examples.

The fraction of the tetragonal phase contained in the crystal phase of the zirconia sintered body is 20% or more and 97% or less.

The more the tetragonal phase is contained, the more the mechanical properties are improved. Since the zirconia sintered body has a tetragonal phase fraction of 20% or more, the zirconia sintered body is superior in mechanical properties. Here, when the average crystal grain diameter is large (that is, when the average crystal grain diameter is 90 nm or more), the parallel light transmittance (transparency) decreases due to the presence of the tetragonal phase. However, since the average crystal grain diameter of the zirconia sintered body is as small as 90 nm or less (that is, the Rayleigh scattering model can be applied), the parallel light transmittance can be maintained high even when there are many tetragonal phases. Therefore, even when the upper limit of the tetragonal phase fraction is 98%, the parallel light transmittance can be maintained high.

The tetragonal phase fraction is preferably 96.5% or less, more preferably 96.2% or less, still more preferably 96.0% or less, and particularly preferably 95.0% or less.

The tetragonal phase fraction is preferably 20.5% or more, more preferably 21.0% or more, still more preferably 21.5% or more, and particularly preferably 22.0% or more.

The tetragonal phase fraction is preferably 20.5% or more and 96.5% or less, and more preferably 21.0% or more and 96.2% or less.

The tetragonal phase fraction can be controlled by, for example, the content of a stabilizer (in particular, CaO).

The tetragonal phase fraction is determined by the method described in Examples.

The fraction of the cubic phase contained in the crystal phase of the zirconia sintered body is 3% or more and 80% or less. Since cubic phases do not have optical anisotropy (have optical isotropy), when the cubic phase fraction is increased, the total light transmittance (translucency) and the parallel light transmittance (transparency) are increased. On the other hand, since cubic phases have a characteristic of being easily grown, if the cubic phase fraction is excessively high, crystal grains become large, and the parallel light transmittance (transparency) decreases. Since the zirconia sintered body has a cubic phase fraction of 3% or more, the total light transmittance and the parallel light transmittance can be increased. In addition, since the zirconia sintered body has a cubic phase fraction of 80% or less, the grain growth can be suppressed, and the parallel light transmittance can be maintained high.

The cubic phase fraction is preferably 79.0% or less, more preferably 78.0% or less, still more preferably 77.0% or less, and particularly preferably 76.0% or less.

The cubic phase fraction is preferably more than 3.0%, more preferably 3.1% or more, still more preferably 3.5% or more, particularly preferably 4.0% or more, especially preferably 4.5% or more, extremely preferably 5.0% or more, and further preferably 6.0% or more.

The cubic phase fraction is preferably more than 3.0% and 79.0% or less, more preferably 3.1% or more and 79.0% or less, still more preferably 3.5% or more and 78.0% or less, particularly preferably 4.0% or more and 78.0% or less, especially preferably 5.0% or more and 78.0% or less, and extremely preferably 6.0% or more and 78.0%.

The cubic phase fraction can be controlled by, for example, the content of a stabilizer (in particular, CaO).

The cubic phase fraction is determined by the method described in Examples.

<Relative sintered density>

The relative sintered density of the zirconia sintered body is 99% or more. Since the relative sintered density of the zirconia sintered body is 99% or more, it can be said that the zirconia sintered body has high strength.

The relative sintered density is preferably 99.1% or more, and more preferably 99.2% or more.

The relative sintered density is preferably as large as possible and is, for example, 99.9% or less, or 99.8% or less.

The relative sintered density is preferably 99.1% or more and 99.9% or less, and more preferably 99.2% or more and 99.9% or less.

<Method for measuring relative sintered density of zirconia sintered body>

The relative sintered density refers to a relative sintered density represented by the following formula (1):

$$\text{Relative sintered density (\%)} = (\text{sintered density/theoretical sintered density}) \times 100 \tag{1}$$

Here, the theoretical sintered density (denoted by $\rho_0$) is a value calculated by the following formula (2-1):

$$\rho_0 = 100/[(A/3.99) + (100 - A)/\rho z]... \quad (2\text{-}1)$$

wherein A is the concentration (wt%) of alumina and $\rho z$ is a value calculated by the following formula (2-2):

$$\rho z = -0.0400 \ (\text{molar concentration of CaO}) + 6.1700...$$

$$(2\text{-}2).$$

The theoretical sintered density (denoted by $\rho_1$) in the case of containing another component other than alumina (a stabilizer, a colorant, or the like) is a value calculated by the following formula (2-3):

$$\rho_1 = 100/[(Z/V) + (100 - Z)/\rho_0]... \quad (2\text{-}3)$$

wherein Z is the concentration (wt%) of the other component other than alumina, and V is the theoretical density (g/cm$^3$) of the other component.

The theoretical sintered density (denoted by $\rho_2$) in the case of containing two types of other components other than alumina is a value calculated by the following formula (2-4):

$$\rho_2 = 100/[(Z1/V1) + (Z2/V2) + (100 - Z1 - Z2)/\rho_0]...$$

$$(2\text{-}4)$$

wherein Z1 is the concentration (wt%) of the first other component other than alumina, Z2 is the concentration (wt%) of the second other component other than alumina, V1 is the theoretical density (g/cm$^3$) of the first other component, and V2 is the theoretical density (g/cm$^3$) of the second other component.

The sintered density is measured by the Archimedes method.

<Total light transmittance>

The zirconia sintered body preferably has a total light transmittance as measured at a thickness of 1 mm of 40% or more and 50% or less. When the total light transmittance of the zirconia sintered body as measured at a thickness of 1 mm is 40% or more, it can be said that the zirconia sintered body is further superior in translucency.

The total light transmittance is preferably 41% or more, and more preferably 42% or more.

The total light transmittance is preferably as high as possible, and is, for example, 49% or less, or 48% or less.

The total light transmittance is preferably 41% or more and 50% or less, and more preferably 42% or more and 50% or less.

The total light transmittance is determined by the method described in Examples.

<Parallel light transmittance>

The zirconia sintered body preferably has a parallel light transmittance as measured at a thickness of 1 mm of 1% or more and 15% or less. When the parallel light transmittance of the zirconia sintered body as measured at a thickness of 1 mm is 1% or more, it can be said that the zirconia sintered body is further superior in translucency.

The parallel light transmittance is preferably 1.5% or more, and more preferably 2.0% or more.

The parallel light transmittance is preferably as high as possible, and is, for example, 14.0% or less, or 13.0% or less.

The parallel light transmittance is preferably 1.5% or more and 15.0% or less, and more preferably 2.0% or more and 15.0% or less.

The parallel light transmittance is determined by the method described in Examples.

<Mechanical strength>

The zirconia sintered body preferably has a three-point bending strength a three-point bending strength of 300 MPa or more and 1500 MPa or less.

The three-point bending strength is more preferably 400 MPa or more, and still more preferably 500 MPa or more. The three-point bending strength is preferably as high as possible and may be, for example, 1400 MPa or less, or 1300 MPa or less.

The three-point bending strength is more preferably 400 MPa or more and 1400 MPa or less, and still more preferably 500 MPa or more and 1300 MPa or less.

When the three-point bending strength is 300 MPa or more, the zirconia sintered body can be regarded as having higher strength. The three-point bending strength is determined by the method described in Examples.

<Toughness>

The zirconia sintered body preferably has a toughness value as measured by an IF method of 3 MPa•m$^{0.5}$ or more and 15 MPa•m$^{0.5}$ or less.

The toughness value is more preferably 3.2 MPa•m$^{0.5}$ or more, and still more preferably 3.5 MPa•m$^{0.5}$ or more. The toughness value is preferably as large as possible and may be, for example, 14.0 MPa•m$^{0.5}$ or less, or 13.0 MPa•m$^{0.5}$ or less.

The toughness value is more preferably 3.2 MPa•m$^{0.5}$ or more and 14.0 MPa•m$^{0.5}$ or less, and still more preferably 3.5 MPa•m$^{0.5}$ or more and 13.0 MPa•m$^{0.5}$ or less.

When the toughness value is 3 MPa•m$^{0.5}$ or more, toughness can be regarded as being higher. The toughness value is determined by the method described in Examples.

<Resistance to hydrothermal degradation>

The zirconia sintered body preferably has a monoclinic phase fraction of 2.0% or less after hydrothermal treatment at 134°C and 0.3 MPa (absolute pressure of 0.3 MPa) for 75 hours. When the monoclinic phase fraction after hydrothermal treatment is 2.0% or less, it can be said that the zirconia sintered body is superior in resistance to hydrothermal degradation. The monoclinic phase fraction after the hydrothermal treatment can be controlled by, for example, the amount of CaO added or the average crystal grain diameter.

The monoclinic phase fraction after the hydrothermal treatment is more preferably 1.7% or less, and still more preferably 1.5% or less. The monoclinic phase fraction after the hydrothermal treatment is preferably as small as possible, and is, for example, 0.1% or more, or 0.2% or more.

The monoclinic phase fraction after the hydrothermal treatment is more preferably 0.2% or more and 1.7% or less, and still more preferably 0.1% or more and 1.5% or less.

How to obtain the zirconia sintered body according to the present embodiment is not particularly limited, but it can be obtained by, for example, using a method for producing a zirconia sintered body to be described later using a zirconia powder to be described later.

The zirconia sintered body according to the present embodiment can be used as an industrial part, an aesthetic part, or a dental material. More specifically, the zirconia sintered body can be used for jewelry, watch parts, watch faces, artificial teeth, members for molding processing, wear resistant members, chemical resistant members, etc.

[Zirconia powder]

The zirconia powder according to the present embodiment contains stabilized zirconia containing zirconia and a stabilizer, wherein

the stabilizer contains CaO,
a content of the CaO in the stabilized zirconia is 4.5 mol% or more and 12 mol% or less in terms of oxide,
the zirconia powder has:

a specific surface area of 20 $m^2$/g or more and 80 $m^2$/g or less, and
a peak top diameter of 20 nm or more and 100 nm or less in a pore volume distribution in a range of 10 nm or more and 200 nm or less in a pore distribution based on a mercury intrusion method, and
when the zirconia powder is molded with a pressure of 2.0 t/$cm^2$ using cold isostatic pressing, a relative molding density of 40% or more and 48% or less is attained.

The zirconia powder according to the present embodiment can be used in a method for producing a zirconia sintered body described later.

The zirconia powder includes primary particles containing zirconia as a main component. All or some of the primary particles are aggregated to form secondary particles. That is, the zirconia powder includes primary particles that are not aggregated and secondary particles in which primary particles are aggregated.

It is noted that, in the zirconia powder, the amount of primary particles that do not form secondary particles and exist in the state of unaggregated primary particles is very small, and is, for example, less than 1 mass% of the entire primary particles (namely, the total of unaggregated primary particles and primary particles aggregated and forming secondary particles). That is, the zirconia powder may contain a very small amount of unaggregated primary particles, but most of the zirconia powder is composed of secondary particles.

The phrase "containing zirconia as a main component" means that the primary particles contain zirconia in an amount of 70 mass% or more based on 100 mass% of the primary particles. In other words, in the present description, primary particles containing zirconia as a main component refer to primary particles containing zirconia at 70% by mass or more. The content of zirconia contained in the primary particles is preferably 74% by mass or more, more preferably 80% by mass or more, and still more preferably 85% by mass or more.

As described above, the zirconia powder according to the present embodiment contains stabilized zirconia.

The content of the stabilized zirconia is preferably 70 mass% or more, more preferably 75 mass% or more, still more preferably 80 mass% or more, and particularly preferably 85 mass% or more when the entire amount of the zirconia powder is taken as 100 mass%. The content of the stabilized zirconia may be 99 mass% or less, 95 mass% or less, or the like when the entire amount of the zirconia powder is taken as 100 mass%. The zirconia powder may be composed of only the stabilized zirconia. That is, the zirconia powder may be formed by sintering only the stabilized zirconia. In this case, the content of the stabilized zirconia is 100 mass% when the entire amount of the zirconia powder is taken as 100 mass%.

The content of the stabilized zirconia is preferably 70 mass% or more and 99 mass% or less, more preferably 75 mass% or more and 95 mass% or less, still more preferably 80 mass% or more and 95 mass% or less, and particularly preferably 85 mass% or more and 95 mass% or less when the entire amount of the zirconia powder is taken as 100 mass%.

The stabilized zirconia contains zirconia and a stabilizer.

The total content of zirconia and the stabilizer in the stabilized zirconia is preferably 70 mass% or more, and more preferably 80 mass% or more when the entire amount of the stabilized zirconia is taken as 100 mass%. The total content of zirconia and the stabilizer may be 99 mass% or less, 95 mass% or less, or the like when the entire amount of the stabilized zirconia is taken as 100 mass%.

The total content of zirconia and the stabilizer in the stabilized zirconia is preferably 70 mass% or more and 99 mass% or less, and more preferably 80 mass% or more and 95 mass% or less when the entire amount of the stabilized zirconia is taken as 100 mass%.

The stabilized zirconia may be composed of only zirconia and a stabilizer.

The stabilizer includes CaO.

The content of the CaO in the stabilized zirconia is 4.5 mol% or more and 12 mol% or less in terms of oxide.

Since the content of the CaO in the stabilized zirconia is 4.5 mol% or more in terms of oxide, the monoclinic phase fraction of a sintered body obtained by sintering the zirconia powder can be 2% or less.

In addition, since the content of the CaO in the stabilized zirconia is 4.5 mol% or more in terms of oxide and 12 mol% or less in terms of oxide, the tetragonal phase fraction of the sintered body obtained by sintering the zirconia powder can be 20% or more and 97% or less, and the cubic phase fraction can be 3% or more and 80% or less.

The content of the CaO in the stabilized zirconia is preferably 4.6 mol% or more, more preferably 4.7 mol% or more, still more preferably 4.8 mol% or more, particularly preferably 4.9 mol% or more, and especially preferably 5.0 mol% or more in terms of oxide.

The content of the CaO in the stabilized zirconia is preferably 11.7 mol% or less, more preferably 11.5 mol% or less, still more preferably 11.3 mol% or less, particularly preferably 11.1 mol% or less, and especially preferably 10.9 mol% or less in terms of oxide. The content of the CaO in the stabilized zirconia is preferably 4.6 mol% or more and 11.7 mol% or less in terms of oxide, and more preferably 4.7 mol% or more and 11.5 mol% or less in terms of oxide.

The stabilizer may further include another stabilizer other than CaO. The other stabilizer is not particularly limited, and examples thereof include $YO_{1.5}$, $YbO_{1.5}$, $ErO_{1.5}$, $CeO_2$, $NdO_{1.5}$, $LaO_{1.5}$, and $TbO_{1.5}$. These other stabilizers may be contained single or two or more of them may be contained.

When another stabilizer other than CaO is contained, the content thereof is preferably within a range where neither transparency nor translucency of the sintered body obtained by sintering the zirconia powder is significantly affected.

When another stabilizer other than CaO is contained, the content of the other stabilizer in the stabilized zirconia is preferably 0.01 mol% or more and 6.0 mol% or less in terms of oxide.

The content of the other stabilizer in the stabilized zirconia is more preferably 0.05 mol% or more, and still more preferably 0.10 mol% or more in terms of oxide.

The content of the other stabilizer in the stabilized zirconia is preferably 5.5 mol% or less, and more preferably 5.0 mol% or less in terms of oxide.

The content of the other stabilizer in the stabilized zirconia is more preferably 0.05 mol% or more and 5.5 mol% or less in terms of oxide, and still more preferably 0.10 mol% or more and 5.0 mol% or less in terms of oxide.

When $YO_{1.5}$ is contained as the other stabilizer, the content of $YO_{1.5}$ in the stabilized zirconia is preferably 0.1 mol% or more, more preferably 0.5 mol% or more, and the content is still more preferably 0.6 mol% or more.

When $YO_{1.5}$ is contained as the other stabilizer, the content of $YO_{1.5}$ in the stabilized zirconia is preferably 5.9 mol% or less, and more preferably 5.8 mol% or less.

When $YO_{1.5}$ is contained as the other stabilizer, the content of $YO_{1.5}$ in the stabilized zirconia is preferably 0.1 mol% or more and 5.9 mol% or less, more preferably 0.5 mol% or more and 5.9 mol% or less, and still more preferably 0.6 mol% or more and 5.8 mol% or less.

When $ErO_{1.5}$ is contained as the other stabilizer, the content of $ErO_{1.5}$ in the stabilized zirconia is preferably 0.1 mol% or more, more preferably 0.2 mol% or more, still more preferably 0.4 mol% or more, and particularly preferably 0.42 mol% or more.

When $ErO_{1.5}$ is contained as the other stabilizer, the content of $ErO_{1.5}$ in the stabilized zirconia is preferably 1.5 mol% or less, more preferably 1.0 mol% or less, still more preferably 0.5 mol% or less, and particularly preferably 0.46 mol% or less.

When $ErO_{1.5}$ is contained as the other stabilizer, the content of $ErO_{1.5}$ in the stabilized zirconia is preferably 0.1 mol% or more and 1.5 mol% or less, more preferably 0.2 mol% or more and 1.0 mol% or less, still more preferably 0.4 mol% or more and 0.5 mol% or less, and particularly preferably 0.42 mol% or more and 0.46 mol% or less.

When $CeO_2$ is contained as the other stabilizer, the content of $CeO_2$ in the stabilized zirconia is preferably 0.03 mol% or more, and more preferably 0.05 mol% or more.

When $CeO_2$ is contained as the other stabilizer, the content of $CeO_2$ in the stabilized zirconia is preferably 1.0 mol% or less, more preferably 0.5 mol% or less, still more preferably 0.25 mol% or less, and particularly preferably 0.2 mol% or less.

When $CeO_2$ is contained as the other stabilizer, the content of $CeO_2$ in the stabilized zirconia is preferably 0.03 mol% or more and 1.0 mol% or less, more preferably 0.05 mol% or more and 0.5 mol% or less, still more preferably 0.03 mol% or more and 0.25 mol% or less, and particularly preferably 0.05 mol% or more and 0.2 mol% or less.

When $NdO_{1.5}$ is contained as the other stabilizer, the content of $NdO_{1.5}$ in the stabilized zirconia is preferably 0.05 mol% or more, more preferably 0.1 mol% or more, still more preferably 0.25 mol% or more, and particularly preferably 0.28 mol% or more.

When $NdO_{1.5}$ is contained as the other stabilizer, the content of $NdO_{1.5}$ in the stabilized zirconia is preferably 0.5 mol% or less, more preferably 0.4 mol% or less, preferably 0.35 mol% or less, and more preferably 0.32 mol% or less.

When $NdO_{1.5}$ is contained as the other stabilizer, the content of $NdO_{1.5}$ in the stabilized zirconia is preferably 0.05 mol% or more and 0.5 mol% or less, more preferably 0.1 mol% or more and 0.4 mol% or less, still more preferably 0.25 mol% or more and 0.35 mol% or less, and particularly preferably 0.28 mol% or more and 0.32 mol% or less.

When $LaO_{1.5}$ is contained as the other stabilizer, the content of $LaO_{1.5}$ in the stabilized zirconia is preferably 0.05 mol% or more, more preferably 0.1 mol% or more, still more preferably 0.15 mol% or more, and particularly preferably 0.18 mol% or more.

When $LaO_{1.5}$ is contained as the other stabilizer, the content of $LaO_{1.5}$ in the stabilized zirconia is preferably 1.0 mol% or less, more preferably 0.5 mol% or less, still more preferably 0.25 mol% or less, and particularly preferably 0.22 mol% or less.

When $LaO_{1.5}$ is contained as the other stabilizer, the content of $LaO_{1.5}$ in the stabilized zirconia is preferably 0.05 mol% or more and 1.0 mol% or less, more preferably 0.1 mol% or more and 0.5 mol% or less, still more preferably 0.15 mol% or more and 0.25 mol% or less, and particularly preferably 0.18 mol% or more and 0.22 mol% or less.

When $TbO_{1.5}$ is contained as the other stabilizer, the content of $TbO_{1.5}$ in the stabilized zirconia is preferably 0.05 mol% or more, and more preferably 0.08 mol% or more.

When $TbO_{1.5}$ is contained as the other stabilizer, the content of $TbO_{1.5}$ in the stabilized zirconia is preferably 0.15 mol% or less, and more preferably 0.12 mol% or less.

When $TbO_{1.5}$ is contained as the other stabilizer, the content of $TbO_{1.5}$ in the stabilized zirconia is preferably 0.05 mol% or more and 0.15 mol% or less, and more preferably 0.08 mol% or more and 0.12 mol% or less.

When $YbO_{1.5}$ is contained as the other stabilizer, the content of $YbO_{1.5}$ in the stabilized zirconia is preferably 0.1 mol% or more, more preferably 0.2 mol% or more, still more preferably 1.0 mol% or more, and particularly preferably 1.2 mol% or more.

When $YbO_{1.5}$ is contained as the other stabilizer, the content of $YbO_{1.5}$ in the stabilized zirconia is preferably 3.0 mol% or less, more preferably 2.0 mol% or less, and still more preferably 1.7 mol% or less.

When $YbO_{1.5}$ is contained as the other stabilizer, the content of $YbO_{1.5}$ in the stabilized zirconia is preferably 0.1 mol% or more and 3.0 mol% or less, more preferably 0.2 mol% or more and 2.0 mol% or less, still more preferably 1.0 mol% or more and 2.0 mol% or less, and particularly preferably 1.2 mol% or more and 1.7 mol% or less.

The total amount of the stabilizer in the stabilized zirconia is preferably 4.5 mol% or more and 12.0 mol% or less in terms of oxide. When the total amount of the stabilizer is 4.5 mol% or more in terms of oxide, the monoclinic phase fraction of a sintered body obtained by sintering the zirconia powder can be further reduced. When the total amount of the stabilizers is 12.0 mol% or less in terms of oxide, the fraction of a cubic phase having low mechanical properties (strength, toughness) in a sintered body obtained by sintering the zirconia powder can be reduced and the fraction of a tetragonal phase having high mechanical properties can be increased.

The total amount of the stabilizers is more preferably 4.6 mol% or more, still more preferably 4.7 mol% or more, and particularly preferably 4.8 mol% or more in terms of oxide.

The total amount of the stabilizers is more preferably 11.7 mol% or less, still more preferably 11.5 mol% or less, and particularly preferably 11.3 mol% or less in terms of oxide.

The total amount of the stabilizers is more preferably 4.6 mol% or more and 11.7 mol% or less, still more preferably 4.7 mol% or more and 11.5 mol% or less, and particularly preferably 4.8 mol% or more and 11.5 mol% or less in terms of oxide.

The content of zirconia in the stabilized zirconia is preferably 80 mass% or more and 99 mass% or less. The content of zirconia in the stabilized zirconia is more preferably 85 mass% or more, and still more preferably 90 mass% or more. The content of zirconia in the stabilized zirconia is more preferably 98 mass% or less, and still more preferably 97 mass% or less.

The content of zirconia in the stabilized zirconia is more preferably 85 mass% or more and 98 mass% or less, and still more preferably 90 mass% or more and 97 mass% or less.

The zirconia powder preferably contains $Al_2O_3$ (alumina) in an amount of 0.40 mass% or less relative to the entire amount of the zirconia powder. When $Al_2O_3$ is contained throughout the zirconia powder, the $Al_2O_3$ functions as a sintering aid, and thus the zirconia powder is superior in low-temperature sinterability. In addition, when the content of $Al_2O_3$ is 0.40 mass% or less, scattering by precipitated phases (grain boundaries) of alumina (an impurity) of a sintered body obtained by sintering the zirconia powder is reduced, so that translucency and transparency can be maintained high.

When the zirconia powder contains $Al_2O_3$, the content of the $Al_2O_3$ is more preferably 0.01 mass% or more, and still more preferably 0.05 mass% or more.

When the zirconia powder contains $Al_2O_3$, the content of the $Al_2O_3$ is more preferably 0.37 mass% or less, and still more preferably 0.35 mass% or less.

When the zirconia powder contains $Al_2O_3$, the content of the $Al_2O_3$ is more preferably 0.01 mass% or more and 0.37 mass% or less, and still more preferably 0.05 mass% or more and 0.35 mass% or less.

In addition to alumina, the zirconia powder may contain sinterable ceramics, a thermosetting resin, or the like for the purpose of improving properties such as strength.

The zirconia powder may contain at least one selected from the group consisting of Fe, V, Mn, Co, Zn, Cu, and Ti as long as neither the transparency nor the translucency is significantly affected. When the zirconia powder contains at least one selected from the group consisting of Fe, V, Mn, Co, Zn, Cu, and Ti as a coloring element, a zirconia sintered body obtained by sintering the zirconia powder can appropriately be colored.

The form of the coloring element is not limited, and the coloring element can be added in the form of an oxide, a chloride, or the like. Examples of a colorant containing the coloring element specifically include $Fe_2O_3$, $V_2O_5$, $MnO_2$, CoO, ZnO, CuO, and $TiO_2$. The colorant is preferably added to and mixed with the zirconia powder.

When $Fe_2O_3$ is contained as the colorant, the content of the colorant is preferably 0.005 mass% or more and 1 mass% or less, more preferably 0.05 mass% or more and 0.5 mass% or less when the entire amount of the zirconia powder is taken as 100 mass%. When the content of the colorant is 0.005 mass% or more, intended coloring is easily achieved. That is, the color tone can be easily adjusted.

When $V_2O_5$ is contained as the colorant, the content thereof is preferably 0.005 mass% or more and 0.5 mass% or less, more preferably 0.01 mass% or more and 0.1 mass% or less when the entire amount of the zirconia powder is taken as 100 mass%. When the content of the colorant is 0.005 mass% or more, intended coloring is easily achieved. That is, the color tone can be easily adjusted.

When $MnO_2$ is contained as the colorant, the content thereof is preferably 0.005 mass% or more and 2 mass% or less, more preferably 0.1 mass% or more and 1.1 mass% or less when the entire amount of the zirconia powder is taken as 100 mass%. When the content of the colorant is 0.005 mass% or more, intended coloring is easily achieved. That is, the color tone can be easily adjusted.

When CoO is contained as the colorant, the content of the colorant is preferably 0.005 mass% or more and 2 mass% or less, more preferably 0.01 mass% or more and 1.5 mass% or less when the entire amount of the zirconia powder is taken as 100 mass%. When the content of the colorant is 0.005 mass% or more, intended coloring is easily achieved. That is, the color tone can be easily adjusted.

When ZnO is contained as the colorant, the content of the colorant is preferably 0.005 mass% or more and 1 mass% or less, more preferably 0.1 mass% or more and 0.5 mass% or less when the entire amount of the zirconia powder is taken as 100 mass%. When the content of the colorant is 0.005 mass% or more, intended coloring is easily achieved. That is, the color tone can be easily adjusted.

When CuO is contained as the colorant, the content of the colorant is preferably 0.005 mass% or more and 1 mass% or less, more preferably 0.05 mass% or more and 0.6 mass% or less when the entire amount of the zirconia powder is taken as 100 mass%. When the content of the colorant is 0.005 mass% or more, intended coloring is easily achieved. That is, the color tone can be easily adjusted.

When $TiO_2$ is contained as the colorant, the content of the colorant is preferably 0.005 mass% or more and 2 mass% or less, more preferably 0.01 mass% or more and 1 mass% or less, even more preferably 0.1 mass% or more and 0.3 mass% or less when the entire amount of the zirconia powder is taken as 100 mass%. When the content of the colorant is 0.005 mass% or more, intended coloring is easily achieved. That is, the color tone can be easily adjusted.

<Specific surface area>

The zirconia powder has a specific surface area of 20 $m^2$/g or more and 80 $m^2$/g or less. The specific surface area is preferably 22 $m^2$/g or more, more preferably 24 $m^2$/g or more, still more preferably 26 $m^2$/g or more, and particularly preferably 28 $m^2$/g or more. The specific surface area is preferably 75 $m^2$/g or less, more preferably 70 $m^2$/g or less, still more preferably 65 $m^2$/g or less, and particularly preferably 60 $m^2$/g or less.

The specific surface area is more preferably 22 $m^2$/g or more and 75 $m^2$/g or less, more preferably 24 $m^2$/g or more and 70 $m^2$/g or less, still more preferably 26 $m^2$/g or more and 65 $m^2$/g or less, and particularly preferably 28 $m^2$/g or more and 60 $m^2$/g or less.

The specific surface area refers to a value obtained by the method described in Examples.

<Pore distribution>

1. Peak top diameter of interparticle spaces between primary particles

The zirconia powder has a peak top diameter of 20 nm or more and 100 nm or less in a pore volume distribution in a range of 10 nm or more and 200 nm or less in a pore distribution based on a mercury intrusion method. The peak top diameter is preferably 25 nm or more, more preferably 30 nm or more, still more preferably 32 nm or more, and particularly preferably 35 nm or more. The peak top diameter is preferably 98 nm or less, more preferably 95 nm or less, still more preferably 92 nm or less, and particularly preferably 90 nm or less.

It should be noted that when there are two or more peaks in a range of 10 nm or more and 200 nm or less in the pore distribution, the phrase "has a peak top diameter of 20 nm or more and 100 nm or less in a pore volume distribution" as used herein means that all the peak top diameters in a range of 10 nm or more and 200 nm or less in the pore distribution are within a range of 20 nm or more and 100 nm or less.

2. Pore distribution width of interparticle spaces between primary particles

The zirconia powder has a pore distribution width of 40 nm or more and 160 nm or less in a range of 10 nm or more and 200 nm or less in a pore distribution based on a mercury intrusion method. The pore distribution width is preferably 43 nm or more, more preferably 46 nm or more, still more preferably 50 nm or more, and particularly preferably 55 nm or more. The pore distribution width is preferably 135 nm or less, more preferably 130 nm or less, still more preferably 125 nm or less, particularly preferably 123 nm or less, and especially preferably 120 nm or less.

Here, the pore distribution width refers to the width of a peak at which the log differential pore volume is 0.1 ml/g or more.

It should be noted that when there are two or more peaks in a range of 10 nm or more and 200 nm or less in the pore distribution, the phrase "has a pore distribution width of 40 nm or more and 140 nm or less" as used herein means that when, in a graph showing a pore distribution with pore diameter as abscissa and log differential pore volume as ordinate, a point intersecting with a log differential pore volume of 0.1 mL/g for the first time as viewed from a side where the pore diameter is smaller (a point intersecting while ascending) is defined as a minimum diameter and a point intersecting with a log differential pore volume of 0.1 mL/g again (a point intersecting while descending) is defined as a maximum diameter, the difference between the maximum diameter and the minimum diameter is 40 nm or more and 140 nm or less.

3. Pore volume of interparticle spaces between primary particles

The zirconia powder has a pore volume of 0.2 ml/g or more and less than 0.65 ml/g in a range of 10 nm or more and 200 nm or less in a pore distribution based on a mercury intrusion method. The total pore volume is preferably 0.22 ml/g or more, more preferably 0.25 ml/g or more, still more preferably 0.3 ml/g or more, particularly preferably 0.32 ml/g or more, and especially preferably 0.35 ml/g or more. The total pore volume is preferably 0.63 ml/g or less, more preferably 0.60 ml/g or less, and still more preferably 0.58 ml/g or less.

The peak top diameter, the pore distribution width, and the pore volume refer to values obtained by the methods described in Examples.

Since the zirconia powder described above has a specific surface area of 20 m$^2$/g or more and 80 m$^2$/g or less and a peak top diameter of 20 nm or more and 100 nm or less in a pore volume distribution in a range of 10 nm or more and 200 nm or less in a pore distribution based on a mercury intrusion method, when the zirconia powder is molded with a pressure of 2.0 t/cm$^2$ using cold isostatic pressing, a relative molding density of 40% or more and 48% or less can be attained.

When the zirconia powder is molded with a pressure of 2.0 t/cm$^2$ using cold isostatic pressing (CIP), it is preferable that a relative molding density of 40% or more and 48% or less is attained.

Here, the relative molding density is a value calculated by the following formula (3).

$$\text{Relative molding density (\%)} = (\text{molding density/theoretical sintered density}) \times 100 \tag{3}$$

The theoretical sintered density (denoted by $\rho_0$) is a value calculated by the formula (2-1) described in the preceding section of "Method for measuring relative sintered density of zirconia sintered body".

Since a relative molding density of 40% or more and 48% or less is attained when the zirconia powder is molded with a pressure of 2.0 t/cm$^2$ using cold isostatic pressing, when a molded body obtained by molding the zirconia powder with a pressure of 1.0 t/cm$^2$ or more and 2.5 t/cm$^2$ or less is subjected to the pre-sintering of the step B described later and the final sintering of the step C described later, it is possible to obtain a zirconia sintered body having an average crystal grain diameter of 90 nm or less, a monoclinic phase fraction of 2% or less, a tetragonal phase fraction of 20% or more and 97% or less, a cubic phase fraction of 3% or more and 80% or less, and a relative sintered density of 99% or more.

The relative molding density is more preferably 40.5% or more, and still more preferably 41.0% or more.

The relative molding density is more preferably 47.8% or less, and still more preferably 47.6% or less.

The relative molding density is preferably 40.5% or more and 47.8% or less, and more preferably 41.0% or more and 47.6% or less.

The relative molding density refers to a value obtained by the method described in Examples.

<Particle diameter $D_{50}$>

The particle diameter $D_{50}$ of the zirconia powder is preferably 0.1 μm or more and 0.7 μm or less. The particle diameter $D_{50}$ is preferably 0.12 μm or more, more preferably 0.14 μm or more, still more preferably 0.16 μm or more, and particularly preferably 0.2 μm or more. The particle diameter $D_{50}$ is preferably 0.65 μm or less, more preferably 0.6 μm or less, still more preferably 0.55 μm or less, particularly preferably 0.5 μm or less, especially preferably 0.45 μm or less, and extremely preferably less than 0.3 μm.

The zirconia powder according to the present embodiment has been described above.

[Method for producing zirconia powder]

Hereinafter, one example of a method for producing a zirconia powder will be described. However, the method for producing a zirconia powder is not limited to the following example.

The method for producing a zirconia powder according to the present embodiment includes:

step 1 in which a zirconium salt solution and a sulfating agent solution are separately heated to 95°C or higher and 100°C or lower;

step 2 in which the heated zirconium salt solution and the heated sulfating agent solution are brought into contact with each other so that the concentration of a mixed liquid does not change from start to end of the contact, thereby obtaining a basic zirconium sulfate-containing reaction liquid as a mixed liquid;

step 3 in which the basic zirconium sulfate-containing reaction liquid obtained in step 2 is aged at 95°C or more for 3 hours or more;

step 4 in which a stabilizer is added to the aged basic zirconium sulfate-containing reaction liquid obtained in step 3;

step 5 in which an alkali is added to the basic zirconium sulfate-containing reaction liquid obtained in step 4 to obtain a zirconium-containing hydroxide; and

step 6 in which the zirconium-containing hydroxide obtained in step 5 is subjected to thermal treatment to obtain a zirconia powder,

wherein

in the step 2, from start to end of the contact, a weight ratio $SO_4^{2-}/ZrO_2$ in the mixed liquid is maintained in a range of 0.3 to 0.8, and a temperature of the mixed liquid is maintained at 95°C or higher.

Hereinafter, each of the steps will be described in detail.

<Step 1>

In step 1, a zirconium salt solution and a sulfating agent solution as starting materials are separately heated to 95°C or higher and 100°C or lower.

A zirconium salt to be used for preparing the zirconium salt solution may be any zirconium salt that supplies zirconium ions, and, for example, zirconium oxynitrate, zirconium oxychloride, zirconium nitrate, and the like can be used. These may be used singly, or two or more of them may be used in combination. Among these, zirconium oxychloride is preferred in terms of its high productivity on an industrial scale.

A solvent to be used for preparing the zirconium salt solution may be selected according to the type of the zirconium salt used, etc. Usually, water (pure water or ion-exchanged water; the same applies hereinafter) is preferred.

The concentration of the zirconium salt solution is not limited, and in general, the amount of the zirconium salt contained per 1000 g of the solvent is preferably 5 to 250 g, more preferably 20 to 150 g in terms of zirconium oxide ($ZrO_2$).

A sulfating agent may be anyone that reacts with zirconium ions to produce a sulfate (i.e., a sulfating reagent), and examples thereof include sodium sulfate, potassium sulfate, ammonium sulfate, potassium hydrogen sulfate, sodium hydrogen sulfate, potassium disulfate, sodium disulfate, and sulfur trioxide. The sulfating agent may be in any form such as a powder or a solution, but a solution (especially, an aqueous solution) is preferred. As a solvent, solvents the same as those to be used for preparing the zirconium salt solution can be used.

The acid concentration of the zirconium salt solution is preferably set to 0.1 to 2.0 N. By setting the acid concentration to fall within the above range, the aggregation state of particles constituting the zirconia powder can be controlled to be appropriate. The acid concentration can be adjusted by using, for example, hydrochloric acid, nitric acid, sodium hydroxide, or the like.

The concentration of the sulfating agent (the sulfating agent solution) is not particularly limited, and in general, the amount of the sulfating agent is preferably 5 to 250 g, particularly preferably 20 to 150 g per 1000 g of the solvent.

Containers for preparing the zirconium salt solution and the sulfating agent solution are not limited in their materials as long as the containers each have a capacity large enough for sufficiently stirring the zirconium salt solution or the sulfating agent solution. However, the containers preferably have equipment capable of appropriately performing heating so that the temperature of each of the solutions does not fall below 95°C.

The heating temperature of the zirconium salt solution and the sulfating agent solution is not limited as long as it is 95°C or higher and 100 °C or lower, and is preferably 97°C or higher. If step 2 is performed while the temperature of the zirconium salt solution and the sulfating agent solution is kept lower than 95°C, the zirconium salt solution and the sulfating agent do not sufficiently react with each other, resulting in a lowered yield.

<Step 2>

In step 2, the heated zirconium salt solution and the heated sulfating agent solution are brought into contact with each other in such a manner that a concentration of a mixed liquid does not change from start to end of the contact, thereby obtaining a basic zirconium sulfate-containing reaction liquid as a mixed liquid. Here, from start to end of the contact, a weight ratio $SO_4^{2-}/ZrO_2$ in the mixed liquid is maintained in a range of 0.3 to 0.8, and a temperature of the mixed liquid is maintained at 95°C or higher.

Hereinafter, step 2 will be described with reference to the drawings.

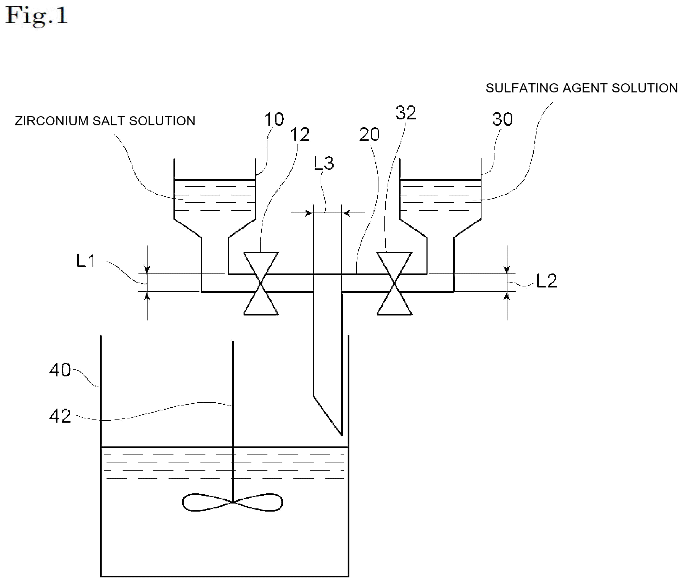

Fig. 1 is a schematic diagram for illustrating the method for producing a zirconia powder according to the present embodiment. As shown in Fig. 1, a container 10 is connected to one upper end (on the left side in Fig. 1) of a T-shaped tube 20 via a valve 12. A container 30 is connected to the other upper end (on the right side in Fig. 1) of the T-shaped tube 20 via a valve 32. In the container 10, a zirconium solution heated to 95°C or higher and 100°C or lower is stored. In the container 30, a sulfating agent solution heated to 95°C or higher and 100°C or lower is stored.

In step 2, by opening the valve 12 and opening the valve 32, the zirconium solution and the sulfating agent solution are brought into contact with each other. The mixed liquid (basic zirconium sulfate-containing reaction liquid) obtained by the contact immediately flows into an aging container 40 from the lower side of the T-shaped tube 20. In step 2, by such a method, the concentration of the reaction liquid (the concentration of the reaction liquid in the T-shaped tube 20) is prevented from changing during a period from start to end of the contact of the zirconium solution with the sulfating agent solution. In step 2, since the concentration change of $SO_4^{2-}/ZrO_2$ during a period from start to end of the contact is prevented, a uniform reactant is obtained. By adopting such a step (step 2), the peak top diameter, the pore volume, and the pore distribution width of primary particles can be controlled.

The weight ratio $SO_4^{2-}/ZrO_2$ in the mixed liquid in step 2 is preferably within a range of 0.3 to 0.8, more preferably 0.4 to 0.7, and still more preferably 0.45 to 0.65. When the weight ratio $SO_4^{2-}/ZrO_2$ in the mixed liquid is adjusted to 0.3 or more, the yield of basic zirconium sulfate as a reaction product can be increased. Further, when the weight ratio $SO_4^{2-}/ZrO_2$ in the mixed liquid is adjusted to 0.8 or less, production of a soluble salt of zirconium sulfate can be prevented, thereby preventing a reduction in the yield of basic zirconium sulfate.

In step 2, in order to maintain the temperature of the mixed liquid at 95°C or higher, it is preferable to install a heater in a tube (e.g., the T-shaped tube 20) or the like for supplying each of the solutions.

Hereinbelow, one example of step 2 will specifically be described.

When 213 g of a 25 mass% aqueous sodium sulfate solution and 450 g of an aqueous zirconium oxychloride solution with a concentration of 16 mass% in terms of $ZrO_2$ are brought into contact with each other using, as the T-shaped tube 20, a T-shaped tube having a tube diameter L1 of 10 mm at one upper end (on the left side in Fig. 1), a tube diameter L2 of 10 mm at the other upper end (on the right side in Fig. 1), and a tube diameter L3 of 15 mm at a lower end, the time (contact time) from the start of contact to the end of contact (until the aqueous zirconium chloride solution in the container 10 and the sulfating agent solution in the container 30 disappear) is preferably 30 seconds to 300 seconds, more preferably 60 seconds to 200 seconds, even more preferably 90 seconds to 150 seconds.

<Step 3>

In step 3, the basic zirconium sulfate-containing reaction liquid obtained in step 2 is aged at 95°C or higher for 3 hours or more. In step 3, for example, the basic zirconium sulfate-containing reaction liquid flowing into the aging container 40 is aged at 95°C or higher for 3 hours or more while being stirred with a stirrer 42. The upper limit of the aging time is not limited, and is, for example, 7 hours or less. The temperature (aging temperature) of the mixed liquid (the basic zirconium sulfate-containing reaction liquid) in step 3 is preferably 95°C or higher, more preferably 97°C or higher and 100°C or lower. By setting the aging temperature to 95°C or higher and the aging time to 3 hours or more, basic zirconium sulfate can sufficiently be produced, thereby increasing the yield.

The mixed liquid contains basic zirconium sulfate as a main component and is a basic zirconium sulfate slurry.

<Step 4>

In step 4, a stabilizer is added to the aged basic zirconium sulfate-containing reaction liquid obtained in step 3.

<Step 5>

In step 5, an alkali is added to the basic zirconium sulfate-containing reaction liquid obtained in step 4 to perform a neutralization reaction. Neutralization produces a zirconium-containing hydroxide.

The alkali is not limited, and examples thereof include sodium hydroxide, sodium carbonate, ammonia, and hydrazine ammonium hydrogen carbonate. The alkali is not particularly limited in concentration, and one diluted with water and having a concentration of 5 to 30% is usually used.

As a method for adding the alkali, there are two methods: (1) adding an alkali solution to the basic zirconium sulfate-containing reaction liquid and (2) adding the basic zirconium sulfate-containing reaction liquid to an alkali solution, but the method is not particularly limited and either of the methods may be used.

After the neutralization, the slurry is filtered to afford a zirconium-containing hydroxide. If necessary, the zirconium-containing hydroxide is preferably washed with water such as pure water to remove impurities. If necessary, drying or the like may be performed after washing with water.

<Step 6>

In step 6, the zirconium-containing hydroxide obtained in step 5 is subjected to thermal treatment (firing) to oxidize the zirconium-containing hydroxide, thereby affording a zirconia powder.

The thermal treatment temperature (firing temperature) and the thermal treatment time (firing time) of the zirconium-containing hydroxide are not particularly limited, but the thermal treatment is usually performed at about 600 to about 1050°C for 1 hour to 10 hours. The firing temperature is more preferably 650°C or higher and 1000°C or lower, and still more preferably 700°C or higher and 980°C or lower. The firing temperature is more preferably 2 hours to 6 hours, and still more preferably 2 hours to 4 hours. When the thermal treatment temperature is set to 600°C or higher and 1000°C or lower, the specific surface area of the resulting zirconia powder can be within a suitable range (20 $m^2$/g or more and 80 $m^2$/g or less). When the thermal treatment temperature is set to 600°C or higher and 1050°C or lower, the pore distribution of the resulting zirconia powder can be within a suitable range. The thermal treatment atmosphere is not limited and may usually be the air or an oxidizing atmosphere.

<Step 7>

After step 6, if necessary, the obtained zirconia powder may be pulverized to form a slurry. In this case, a binder may be added in order to improve moldability. When a slurry is not formed (when the zirconia powder is not pulverized), the binder and the zirconia powder may uniformly be mixed with a kneading machine.

The binder is preferably an organic binder. The organic binder is easily removed from a molded body in a heating furnace filled with an oxidizing atmosphere, so that a degreased body can be obtained, and therefore impurities are less likely to finally remain in a sintered body.

Examples of the organic binder include those that are soluble in alcohol or those that are soluble in a mixed liquid of two or more selected from the group consisting of alcohols, water, aliphatic ketones, and aromatic hydrocarbons. The organic binder may be, for example, at least one selected from the group consisting of polyethylene glycol, glycol fatty acid ester, glycerin fatty acid ester, polyvinyl butyral, polyvinyl methyl ether, polyvinyl ethyl ether, and vinyl propionate. The organic binder may further contain one or more thermoplastic resins insoluble in alcohol or the mixed liquid.

After the addition of the organic binder, a target zirconia powder can be obtained by performing treatment such as drying or pulverization by a publicly-known method.

The particle diameter $D_{50}$ of the zirconia powder can be controlled, for example, by the pulverization in step 7. For example, pulverization is performed according to the state of the zirconia powder obtained in step 5, whereby the particle diameter $D_{50}$ of the zirconia powder can be controlled.

When a sintering aid (for example, alumina) or the like is added, a zirconia powder containing the sintering aid or the like can be obtained by adding it and mixing the resultant after the step 6 described above. As a more detailed method of the mixing, it is preferable to disperse the mixture in pure water or the like to form a slurry, followed by wet-mixing.

In a case where the step 7 described above is performed, a sintering aid or the like may be added when the step 7 is carried out.

The zirconia powder according to the present embodiment has been described above.

[Method for producing zirconia sintered body]

Hereinbelow, one example of a method for producing a zirconia sintered body will be described. However, the method for producing a zirconia sintered body of the present invention is not limited to the following example.

The method for producing a zirconia sintered body according to the present embodiment includes:

step A of molding a zirconia powder at a pressure of 1.0 t/cm$^2$ or more and 2.5 t/cm$^2$ or less to obtain a molded body;
step B of pre-sintering the molded body under ordinary pressure at 1150°C or higher and 1250°C or lower for 1 hour or more and 5 hours or less to obtain a pre-sintered body; and
step C of finally sintering the pre-sintered body under a pressure of 50 MPa or more and 200 MPa or less, at 1150°C or higher and 1250°C or lower for 1 hour or more and 5 hours or less to obtain a sintered body.

In the method for producing a zirconia sintered body according to the present embodiment, first, a zirconia powder is prepared. As the zirconia powder, one described in the section of [Zirconia powder] can be used.

Next, the zirconia powder is molded with a pressure of 1.0 t/cm$^2$ or more and 2.5 t/cm$^2$ or less, whereby a molded body is obtained (step A). For the molding, a commercially available molding machine and cold isostatic pressing (CIP) can be employed. Alternatively, the zirconia powder may once be temporarily molded by a molding machine and then be finally molded by press molding.

The pressure is preferably 1.3 t/cm$^2$ or more, and more preferably 1.5 t/cm$^2$ or more.

The pressure is preferably 2.3 t/cm$^2$ or less, and more preferably 2.2 t/cm$^2$ or less.

The pressure is preferably 1.3 t/cm$^2$ or more and 2.3 t/cm$^2$ or less, and more preferably 1.5 t/cm$^2$ or more and 2.2 t/cm$^2$ or less.

Next, the molded body is pre-sintered under ordinary pressure at 1150°C or higher and 1250°C or lower for 1 hour or more and 5 hours or less, whereby a pre-sintered body is obtained (step B).

In the present embodiment, since the molded body is pre-sintered under relatively low temperature conditions, namely, under ordinary pressure at 1150°C or higher and 1250°C or lower for 1 hour or more and 5 hours or less, a pre-sintered body with suppressed grain growth can be obtained. Since the grain growth is suppressed, it is possible to suppress Rayleigh scattering and to obtain a zirconia sintered body having high translucency and high transparency.

The pre-sintering temperature is preferably 1160°C or higher, and more preferably 1170°C or higher.

The pre-sintering temperature is preferably 1245°C or lower, and more preferably 1240°C or lower.

The pre-sintering temperature is preferably 1160°C or higher and 1245°C or lower, and more preferably 1170°C or higher and 1240°C or lower.

The time of the pre-sintering is preferably 1.2 hours or more, and more preferably 1.5 hours or more.

The time of the pre-sintering is preferably 4.7 hours or less, and more preferably 4.5 hours or less.

The time of the pre-sintering is preferably 1.2 hours or more and 4.7 hours or less, and more preferably 1.5 hours or more and 4.5 hours or less.

The pre-sintering atmosphere may be the air or an oxidizing atmosphere. The pre-sintering may be performed under ordinary pressure, and it is not particularly necessary to apply pressure.

Next, the pre-sintered body is finally sintered under a pressure of 50 MPa or more and 200 MPa or less at 1150°C or higher and 1250°C or lower for 1 hour or more and 5 hours or less, whereby a sintered body is obtained (step C).

The final sintering is not particularly limited as long as it can be performed under a pressure of 50 MPa or more and 200 MPa or less at 1150°C or higher and 1250°C or lower, and for example, a device adopting a hot isostatic pressing (HIP) method can be used.

In step B, since the molded body is pre-sintered under ordinary pressure at 1150°C or higher and 1250°C or lower for 1 hour or more and 5 hours or less, particles of the zirconia powder are moderately bonded to each other in the process of pre-sintering, and pores (interparticle spaces of the zirconia powder) in the molded body can be made into closed pores. That is, the pre-sintering can change pores from a state in which the pores are interconnected to each other (open pores) to isolated closed pores surrounded by aggregates of the zirconia powder.

In step C, the pre-sintered body in which the pores are closed pores is finally sintered under a pressure of 50 MPa or more and 200 MPa or less at 1150°C or higher and 1250°C or lower for 1 hour or more and 5 hours or less, so that the closed pores can be almost completely eliminated. Specifically, by making closed pores as small as possible by compressing the closed pores through pressurization of the final sintering, and by pushing pores out of the sintered body through element diffusion (element flow) during the final sintering, the closed pores can be almost completely eliminated. The total light transmittance (translucency) and the parallel light transmittance (transparency) can be improved by removing the pores.

The pressure of the final sintering is preferably 55 MPa or more, and more preferably 60 MPa or more.

The pressure of the final sintering is preferably 198 MPa or less, and more preferably 195 MPa or less.

The pressure of the final sintering is preferably 55 MPa or more and 198 MPa or less, and more preferably 60 MPa or more and 195 MPa or less.

The final sintering temperature is preferably 1160°C or higher, and more preferably 1170°C or higher.

The final sintering temperature is preferably 1245°C or lower, and more preferably 1240°C or lower.

The final sintering temperature is preferably 1160°C or higher and 1245°C or lower, and more preferably 1170°C or higher and 1240°C or lower.

The time of the final sintering is preferably 1.2 hours or more, and more preferably 1.5 hours or more.

The time of the final sintering is preferably 4.7 hours or less, and more preferably 4.5 hours or less.

The time of the final sintering is preferably 1.2 hours or more and 4.7 hours or less, and more preferably 1.5 hours or more and 4.5 hours or less.

After the pre-sintering in step B, the pre-sintered body is usually cooled to 40°C or lower, and then the final sintering is performed (step C is performed). This is because the step B is sintering at ordinary pressure, whereas the step C is sintering including pressurization, and thus the sintering devices to be used are different. That is, after the pre-sintering is performed, the pre-sintered body is cooled and taken out from the device in which the pre-sintering was performed. Then, the pre-sintered body is placed in the device for performing the final sintering, and to perform the final sintering, usually, the pre-sintered body is cooled to 40°C or lower after the pre-sintering of the step B, and then the temperature is raised again, and the final sintering is performed. However, the process in the present invention is not limited to this example, and for example, when the step B and the step C are performed with the same devices, the final sintering may be performed directly after the pre-sintering of the step B without cooling.

The method for producing a stabilized zirconia sintered body according to the present embodiment has been described above.

EXAMPLES

Hereinafter, the present invention will be described in detail with reference to Examples, but the present invention is not limited to the following Examples as long as they do not depart from the gist of the present invention. The zirconia powder and the zirconia sintered body in each of Examples and Comparative Examples contain hafnium oxide as an unavoidable impurity in an amount of 1.3 to 2.5 mass% (calculated by the following Formula (X)) relative to zirconium oxide.

$$([mass\ of\ hafnium\ oxide]/([mass\ of\ zirconium\ oxide] + [mass\ of\ hafnium\ oxide])) \times 100\ (\%) \qquad \text{<Formula (X)>}$$

[Preparation of zirconia powder]

(Production Example 1)

First, 213 g of a 25 mass% aqueous sodium sulfate solution and 450 g of an aqueous zirconium oxychloride solution having a concentration of 16 mass% in terms of $ZrO_2$ (acid concentration: 1 N) were separately heated to 95°C (step 1). Then, the heated aqueous solutions were brought into contact with each other over 2 minutes so that the mass ratio $SO_4^{2-}/ZrO_2$ in the mixed liquid was 0.50 (step 2).

Next, the obtained basic zirconium sulfate-containing reaction liquid was aged by maintaining the reaction liquid at 95°C for 4 hours, affording basic zirconium sulfate (step 3).

Next, the aged solution was cooled to room temperature, and then calcium carbonate ($CaCO_3$) was added such that the amount thereof was 4.8 mol% in terms of CaO, and the resultant was uniformly mixed (step 4).

Next, a 25 mass% aqueous sodium hydroxide solution was added to the obtained mixed solution to neutralize the mixed solution until the pH reached 13 or more, so that a hydroxide precipitate was formed (step 5).

The obtained hydroxide precipitate was collected by filtration and sufficiently washed with water, and the obtained hydroxide was dried at 105°C for 24 hours. The dried hydroxide was thermally treated at 950°C (firing temperature) in the air for 2 hours to obtain an unpulverized zirconia-based powder (calcia-stabilized zirconia-based powder) (step 6).

An alumina powder having an average particle diameter of primary particles of 0.1 $\mu$m was added to the obtained unpulverized calcia-stabilized zirconia-based powder in an amount of 0.1 mass% relative to the calcia-stabilized zirconia-based powder, and the resultant was pulverized and mixed for 40 hours with a wet ball mill using water as a dispersion medium. The pulverization was performed using $\varphi$ 5-mm zirconia beads. A zirconia slurry obtained after the pulverization was dried at 110°C, affording a zirconia powder according to Production Example 1.

Specifically, the operation was performed using an apparatus as described with reference to Fig. 1.

(Production Example 2)

A zirconia powder according to Production Example 2 was obtained in the same manner as in Production Example 1 except that the amount of calcium carbonate ($CaCO_3$) added was changed to attain 5.6 mol% in terms of CaO.

(Production Example 3)

A zirconia powder according to Production Example 2 was obtained in the same manner as in Production Example 2 except that the amount of the alumina powder added was changed to 0.25 mass%.

(Production Example 4)

A zirconia powder according to Production Example 4 was obtained in the same manner as in Production Example 1 except that the amount of calcium carbonate ($CaCO_3$) added was changed to attain 6.6 mol% in terms of CaO and the alumina powder was not added.

(Production Example 5)

A zirconia powder according to Production Example 5 was obtained in the same manner as in Production Example 4 except that the amount of the alumina powder added was changed to 0.10 mass%.

(Production Example 6)

A zirconia powder according to Production Example 6 was obtained in the same manner as in Production Example 4 except that the amount of the alumina powder added was changed to 0.25 mass%.

(Production Example 7)

A zirconia powder according to Production Example 7 was obtained in the same manner as in Production Example 1 except that the amount of calcium carbonate ($CaCO_3$) added was changed to attain 9.0 mol% in terms of CaO and the amount of the alumina powder added was changed to 0.25 mass%.

(Production Example 8)

A zirconia powder according to Production Example 8 was obtained in the same manner as in Production Example 1 except that the amount of calcium carbonate ($CaCO_3$) added was changed to attain 9.0 mol% in terms of CaO.

(Production Example 9)

A zirconia powder according to Production Example 9 was obtained in the same manner as in Production Example 1 except that the amount of calcium carbonate ($CaCO_3$) added was changed to attain 11.0 mol% in terms of CaO and the amount of the alumina powder added was changed to 0.25 mass%.

(Production Example 10)

A zirconia powder according to Production Example 10 was obtained in the same manner as in Production Example 1 except that the amount of calcium carbonate ($CaCO_3$) added was changed to attain 11.0 mol% in terms of CaO.

(Production Example 11)

A zirconia powder according to Production Example 11 was obtained in the same manner as in Production Example 1 except that the amount of calcium carbonate ($CaCO_3$) added was changed to attain 9.0 mol% in terms of CaO and the firing temperature was changed to 700°C.

(Production Example 12)

A zirconia powder according to Production Example 12 was obtained in the same manner as in Production Example 1 except that the amount of calcium carbonate ($CaCO_3$) added was changed to attain 10.0 mol% in terms of CaO and the firing temperature was changed to 700°C.

(Production Example 13)

A zirconia powder according to Production Example 12 was obtained in the same manner as in Production Example 1 except that the amount of calcium carbonate ($CaCO_3$) added was changed to attain 11.0 mol% in terms of CaO and the firing temperature was changed to 700°C.

(Production Example 14)

A zirconia powder according to Production Example 14 was obtained in the same manner as in Production Example 7 except that the amount of the alumina powder added was changed to 0.05 mass%.

(Production Example 15)

A zirconia powder according to Production Example 15 was obtained in the same manner as in Production Example 5 except that the amount of the alumina powder added was changed to 0.40 mass%.

(Production Example 16)

A zirconia powder according to Production Example 16 was obtained in the same manner as in Production Example 3 except that the amount of calcium carbonate ($CaCO_3$) added was changed to attain 4.5 mol% in terms of CaO.

(Production Example 17)

A zirconia powder according to Production Example 17 was obtained in the same manner as in Production Example 1 except that the amount of calcium carbonate ($CaCO_3$) added was changed to attain 12.0 mol% in terms of CaO and the firing temperature was changed to 840°C.

(Production Example 18)

A zirconia powder according to Production Example 18 was obtained in the same manner as in Production Example 1 except that the amount of calcium carbonate ($CaCO_3$) added was changed to attain 4.4 mol% in terms of CaO and the amount of the alumina powder added was changed to 0.25 mass%.

(Production Example 19)

A zirconia powder according to Production Example 19 was obtained in the same manner as in Production Example 6 except that the firing temperature was changed to 1100°C.

(Production Example 20)

A zirconia powder according to Production Example 20 was obtained in the same manner as in Production Example 1 except that the amount of calcium carbonate ($CaCO_3$) added was added to attain 10.6 mol% in terms of CaO.

(Production Example 21)

A zirconia powder according to Production Example 21 was obtained in the same manner as in Production Example 1 except that the amount of calcium carbonate ($CaCO_3$) added was changed to attain 13.0 mol% in terms of CaO and the amount of the alumina powder added was changed to 0.25 mass%.

(Production Example 22)

A zirconia powder according to Production Example 22 was obtained in the same manner as in Production Example 1 except that the amount of calcium carbonate ($CaCO_3$) added was changed to attain 6.4 mol% in terms of CaO, and an aqueous yttrium chloride solution was further added to 0.6 mol% in terms of $YO_{1.5}$ at the time of adding the calcium carbonate ($CaCO_3$).

(Production Example 23)

A zirconia powder according to Production Example 23 was obtained in the same manner as in Production Example 1 except that the amount of calcium carbonate ($CaCO_3$) added was changed to attain 6.0 mol% in terms of CaO, and an aqueous yttrium chloride solution was further added to 5.8 mol% in terms of $YO_{1.5}$ at the time of adding the calcium carbonate ($CaCO_3$).

(Production Example 24)

A zirconia powder according to Production Example 24 was obtained in the same manner as in Production Example 1 except that the amount of calcium carbonate ($CaCO_3$) added was changed to attain 6.1 mol% in terms of CaO, an aqueous erbium chloride solution was further added to 0.44 mol% in terms of $ErO_{1.5}$ at the time of adding the calcium carbonate ($CaCO_3$), and the amount of the alumina powder added was changed to 0.25 mass%.

(Production Example 25)

A zirconia powder according to Production Example 25 was obtained in the same manner as in Production Example 1 except that the amount of calcium carbonate (CaCO$_3$) added was changed to attain 6.2 mol% in terms of CaO, cerium chloride was further added to 0.2 mol% in terms of CeO$_2$ at the time of adding the calcium carbonate (CaCO$_3$), and the amount of the alumina powder added was changed to 0.25 mass%.

(Production Example 26)

A zirconia powder according to Production Example 26 was obtained in the same manner as in Production Example 1 except that the amount of calcium carbonate (CaCO$_3$) added was changed to attain 6.0 mol% in terms of CaO, and cerium chloride was further added to 0.05 mol% in terms of CeO$_2$ at the time of adding the calcium carbonate (CaCO$_3$).

(Production Example 27)

A zirconia powder according to Production Example 27 was obtained in the same manner as in Production Example 1 except that the amount of calcium carbonate (CaCO$_3$) added was changed to attain 8.0 mol% in terms of CaO, and neodymium chloride was further added to 0.3 mol% in terms of NdO$_{1.5}$ at the time of adding the calcium carbonate (CaCO$_3$).

(Production Example 28)

A zirconia powder according to Production Example 28 was obtained in the same manner as in Production Example 1 except that the amount of calcium carbonate (CaCO$_3$) added was changed to attain 6.5 mol% in terms of CaO, and lanthanum chloride was further added to 0.2 mol% in terms of LaO$_{1.5}$ at the time of adding the calcium carbonate (CaCO$_3$).

(Production Example 29)

A zirconia powder according to Production Example 29 was obtained in the same manner as in Production Example 1 except that the amount of calcium carbonate (CaCO$_3$) added was changed to attain 6.2 mol% in terms of CaO, and terbium chloride was further added to 0.1 mol% in terms of TbO$_{1.5}$ at the time of adding the calcium carbonate (CaCO$_3$).

(Production Example 30)

A zirconia powder according to Production Example 30 was obtained in the same manner as in Production Example 1 except that the amount of calcium carbonate (CaCO$_3$) added was changed to attain 8.0 mol% in terms of CaO, and ytterbium chloride was further added to 1.5 mol% in terms of YbO$_{1.5}$ at the time of adding the calcium carbonate (CaCO$_3$).

[Measurement of specific surface area]

The specific surface area of the zirconia powder of each of Production Examples was measured by BET method using a specific surface area meter ("Macsorb" manufactured by Mountec Co., Ltd.). The results are shown in Tables 1 and 2.

[Measurement of pore volume]

The pore distribution of the zirconia powder of each of Production Examples was obtained by a mercury intrusion method using a pore distribution measuring device ("Autopore IV9500" manufactured by Micromeritics Instrument Corporation). The measurement conditions were as follows.

<Measurement conditions>

Measuring device: Pore distribution measuring device (Autopore IV9500 manufactured by Micromeritics Instrument Corporation)
Measuring range: 0.0036 to 10.3 μm
Number of measurement points: 120 points
Mercury contact angle: 140 degrees
Mercury surface tension: 480 dyne/cm

Using the obtained pore distribution, a peak top diameter, a pore volume, and a pore distribution width in a range of 10 nm or more and 200 nm or less were determined. The results are shown in Tables 1 and 2.

Here, the pore distribution width refers to the width of a peak at which the log differential pore volume is 0.1 ml/g or more.

[Table 1]

| | | Powder | | | | Measurement of mercury pore | | | Molded body | |
|---|---|---|---|---|---|---|---|---|---|---|
| | Stabilizer | Stabilizing material | Specific surface area | Al$_2$O$_3$ | | Peak top diameter | Pore volume | Pore distribution width | Molding pressure | Relative molding density |
| | | mol% | m$^2$/g | mass % | | nm | ml/g | nm | t/cm$^2$ | % |
| Production Example 1 | CaO | 4.8 | 26.3 | 0.10 | | 88 | 0.38 | 106 | 2 | 47.2 |
| Production Example 2 | CaO | 5.6 | 26.3 | 0.10 | | 80 | 0.40 | 68 | 2 | 47.0 |
| Production Example 3 | CaO | 5.6 | 23.8 | 0.25 | | 90 | 0.44 | 73 | 2 | 46.9 |
| Production Example 4 | CaO | 6.6 | 26.4 | - | | 78 | 0.42 | 69 | 2 | 47.0 |
| Production Example 5 | CaO | 6.6 | 26.7 | 0.10 | | 80 | 0.45 | 65 | 2 | 46.9 |
| Production Example 6 | CaO | 6.6 | 23.8 | 0.25 | | 80 | 0.41 | 73 | 2 | 46.6 |
| Production Example 7 | CaO | 9.0 | 28.9 | 0.25 | | 77 | 0.39 | 69 | 2 | 45.2 |
| Production Example 8 | CaO | 9.0 | 30.5 | 0.10 | | 75 | 0.45 | 91 | 2 | 47.1 |
| Production Example 9 | CaO | 11.0 | 29.6 | 0.25 | | 76 | 0.44 | 98 | 2 | 45.1 |
| Production Example 10 | CaO | 11.0 | 31.1 | 0.10 | | 75 | 0.48 | 99 | 2 | 46.8 |
| Production Example 11 | CaO | 9.0 | 66.5 | 0.10 | | 55 | 0.58 | 129 | 2 | 42.0 |
| Production Example 12 | CaO | 10.0 | 67.9 | 0.10 | | 58 | 0.62 | 122 | 2 | 41.8 |
| Production Example 13 | CaO | 11.0 | 68.6 | 0.10 | | 54 | 0.60 | 128 | 2 | 42.0 |
| Production Example 14 | CaO | 9.0 | 28.5 | 0.05 | | 82 | 0.37 | 82 | 2 | 46.4 |
| Production Example 15 | CaO | 6.6 | 20.3 | 0.40 | | 90 | 0.35 | 79 | 2 | 47.4 |
| Production Example 16 | CaO | 4.5 | 26.3 | 0.25 | | 75 | 0.42 | 76 | 2 | 47.3 |

(continued)

| | | Powder | | | Measurement of mercury pore | | | Molded body | |
|---|---|---|---|---|---|---|---|---|---|
| | Stabilizer | Stabilizing material | Specific surface area | Al$_2$O$_3$ | Peak top diameter | Pore volume | Pore distribution width | Molding pressure | Relative molding density |
| | | mol% | m$^2$/g | mass % | nm | ml/g | nm | t/cm$^2$ | % |
| Production Example 17 | CaO | 12.0 | 40.5 | 0.10 | 66 | 0.52 | 91 | 2 | 43.2 |
| Production Example 18 | CaO | 4.4 | 23.3 | 0.25 | 91 | 0.33 | 95 | 2 | 47.2 |
| Production Example 19 | CaO | 6.6 | 16.2 | 0.25 | 105 | 0.26 | 105 | 2 | 48.3 |
| Production Example 20 | CaO | 10.6 | 30.0 | 0.10 | 66 | 0.38 | 90 | 2 | 45.2 |
| Production Example 21 | CaO | 13.0 | 27.8 | 0.25 | 83 | 0.34 | 80 | 2 | 46.5 |

[Table 2]

| | Powder | | | | | | | | | | | Measurement of mercury pore | | | Molded body | |
|---|---|---|---|---|---|---|---|---|---|---|---|---|---|---|---|---|
| | Total amount of stabilizer | CaO | $YO_{1.5}$ | $ErO_{1.5}$ | $CeO_2$ | $NdO_{1.5}$ | $LaO_{1.5}$ | $TbO_{1.5}$ | $YbO_{1.5}$ | Specific surface area | $Al_2O_3$ | Peak top diameter | Pore volume | Pore distribution width | Molding pressure | Relative molding density |
| | mol% | mol% | mol% | mol% | mol% | mol% | mol% | mol% | mol% | $m^2/g$ | mass% | nm | ml/g | nm | $t/cm^2$ | % |
| Production Example 22 | 7.0 | 6.4 | 0.6 | | | | | | | 27.4 | 0.10 | 84 | 0.42 | 70 | 2 | 46.8 |
| Production Example 23 | 11.8 | 6.0 | 5.8 | | | | | | | 27.4 | 0.10 | 90 | 0.43 | 69 | 2 | 48.0 |
| Production Example 24 | 6.5 | 6.1 | | 0.44 | | | | | | 26.9 | 0.25 | 85 | 0.39 | 77 | 2 | 46.9 |
| Production Example 25 | 6.4 | 6.2 | | | 0.2 | | | | | 27.6 | 0.25 | 88 | 0.44 | 79 | 2 | 47.3 |
| Production Example 26 | 6.1 | 6.0 | | | 0.05 | | | | | 28.4 | 0.10 | 84 | 0.45 | 88 | 2 | 46.7 |
| Production Example 27 | 8.3 | 8.0 | | | | 0.3 | | | | 28.5 | 0.10 | 80 | 0.45 | 91 | 2 | 47.3 |
| Production Example 28 | 6.7 | 6.5 | | | | | 0.2 | | | 30.3 | 0.10 | 77 | 0.48 | 98 | 2 | 47.4 |
| Production Example 29 | 6.3 | 6.2 | | | | | | 0.1 | | 28.6 | 0.10 | 79 | 0.44 | 77 | 2 | 47.8 |
| Production Example 30 | 9.5 | 8.0 | | | | | | | 1.5 | 33.5 | 0.10 | 75 | 0.47 | 94 | 2 | 46.9 |

[Preparation of zirconia sintered body]

<1. Molded body>

First, a molded body was obtained by cold isostatic pressing (CIP) from the zirconia powder of each of Production Examples. The molding pressure was as shown in Tables 1 and 2. At this time, the relative molding density of the molded body was determined by the following (3). The results are shown in Tables 1 and 2.

<2. Pre-sintered body>

Next, the molded body was pre-sintered at a pre-sintering temperature and time described in Tables 3 and 4 under ordinary pressure (1 atm), affording a pre-sintered body.

The pre-sintered body of Example 1 is a product obtained by pre-sintering the molded body of Production Example 1.

Similarly, the pre-sintered bodies of Examples 2 to 4 are products obtained by pre-sintering the molded bodies of Production Examples 2 to 4, respectively.

The pre-sintered bodies of Examples 5-1 to 5-2 are both products obtained by pre-sintering the molded body of Production Example 5, and Example 5-1 and Example 5-2 are different from each other only in the pre-sintering conditions.

The pre-sintered bodies of Examples 6-1 to 6-3 are all products obtained by pre-sintering the molded body of Production Example 6, and Examples 6-1, 6-2, and 6-3 are different from each other only in the pre-sintering conditions.

The pre-sintered bodies of Examples 7-1 to 7-2 are both products obtained by pre-sintering the molded body of Production Example 7, and Example 7-1 and Example 7-2 are different from each other only in the pre-sintering conditions.

The pre-sintered bodies of Examples 8 to 13 are products obtained by pre-sintering the molded bodies of Production Examples 8 to 13, respectively.

The pre-sintered bodies of Examples 14 to 17 are products obtained by pre-sintering the molded bodies of Production Examples 14 to 17, respectively.

The pre-sintered body of Comparative Example 1 is a product obtained by pre-sintering the molded body of Production Example 18.

The pre-sintered body of Comparative Example 2 is a product obtained by pre-sintering the molded body of Production Example 19.

The pre-sintered body of Comparative Example 3 is a product obtained by pre-sintering the molded body of Production Example 20.

The pre-sintered body of Comparative Example 4 is a product obtained by pre-sintering the molded body of Production Example 21.

The pre-sintered body of Comparative Example 5 is a product obtained by pre-sintering the molded body of Production Example 2.

The pre-sintered body of Comparative Example 6 is a product obtained by pre-sintering the molded body of Production Example 6.

The pre-sintered bodies of Examples 18 to 26 are products obtained by pre-sintering the molded bodies of Production Examples 22 to 30, respectively.

The relative sintered density (pre-sintered body density) of each of the obtained pre-sintered bodies was determined as follows. The results are shown in Tables 3 and 4.

[Relative sintered density]

The relative sintered density refers to a relative sintered density represented by the following formula (1):

Relative sintered density (%) = (sintered density/theoretical sintered density) $\times$ 100　　　　　　(1)

Here, the theoretical sintered density (denoted by $\rho_0$) is a value calculated by the following formula (2-1):

$$\rho_0 \;=\; 100/[(A/3.99) \;+\; (100 \;-\; A)/\rho z]...\;\;\;(2\text{-}1)$$

wherein A is the concentration (wt%) of alumina and $\rho z$ is a value calculated by the following formula (2-2):

$$\rho z = -0.0400 \text{ (molar concentration of CaO)} + 6.1700...$$

$$(2-2).$$

The theoretical sintered density (denoted by $\rho_1$) in the case of containing another component (stabilizer and colorant) other than alumina is a value calculated by the following formula (2-3):

$$\rho_1 = 100/[(Z/V) + (100 - Z)/\rho_0]... \quad (2-3)$$

wherein Z is the concentration (wt%) of the other component other than alumina, and V is the theoretical density (g/cm$^3$) of the other component.

The theoretical sintered density (denoted by $\rho_2$) in the case of containing two types of other components other than alumina is a value calculated by the following formula (2-4):

$$\rho_2 = 100/[(Z1/V1) + (Z2/V2) + (100 - Z1 - Z2)/\rho_0]...$$

$$(2-4)$$

wherein Z1 is the concentration (wt%) of the first other component other than alumina, Z2 is the concentration (wt%) of the second other component other than alumina, V1 is the theoretical density (g/cm$^3$) of the first other component, and V2 is the theoretical density (g/cm$^3$) of the second other component.

The sintered density was measured by the Archimedes method.

[Relative molding density]

Relative molding density (%) = (molding density/theoretical sintered density) $\times$ 100      (3)

Here, the theoretical sintered density (denoted by $\rho_0$) is a value calculated by Formula (2-1).

<3. Sintered body>

Next, the pre-sintered body was finally sintered with a pressure, a temperature, and a time described in Tables 3 and 4, affording a sintered body. The final sintering was performed with an apparatus employing a hot isostatic pressing (HIP) method.

[Relative sintered density]

The relative sintered density of the sintered body was measured in the same manner as in the measurement of the relative sintered density of the pre-sintered body. The results are shown in Tables 3 and 4.

[Table 3]

| | Calcined body | | | HIP conditions | | | Finally sintered body |
|---|---|---|---|---|---|---|---|
| | Calcination temperature | Calcination time | Relative sintered density of calcined body | Final sintering temperature | Final sintering time | Pressure | Relative sintered density of finally sintered body |
| | °C | hr | % | °C | hr | MPa | % |
| Example 1 | 1200 | 2 | 93.7 | 1200 | 2 | 150 | 99.7 |

(continued)

| | Calcined body | | | HIP conditions | | | Finally sintered body |
|---|---|---|---|---|---|---|---|
| | Calcination temperature | Calcination time | Relative sintered density of calcined body | Final sintering temperature | Final sintering time | Pressure | Relative sintered density of finally sintered body |
| | °C | hr | % | °C | hr | MPa | % |
| Example 2 | 1200 | 2 | 94.2 | 1200 | 2 | 150 | 99.7 |
| Example 3 | 1200 | 2 | 98.9 | 1200 | 2 | 190 | 99.7 |
| Example 4 | 1250 | 2 | 98.1 | 1250 | 2 | 150 | 99.7 |
| Example 5-1 | 1200 | 2 | 93.8 | 1200 | 2 | 150 | 99.6 |
| Example 5-2 | 1220 | 2 | 94.6 | 1200 | 2 | 200 | 99.7 |
| Example 6-1 | 1180 | 2 | 95.7 | 1200 | 2 | 200 | 99.4 |
| Example 6-2 | 1200 | 2 | 98.8 | 1200 | 2 | 190 | 99.6 |
| Example 6-3 | 1200 | 2 | 98.8 | 1230 | 2 | 100 | 99.7 |
| Example 7-1 | 1180 | 2 | 95.8 | 1180 | 2 | 200 | 99.2 |
| Example 7-2 | 1200 | 2 | 98.1 | 1200 | 2 | 150 | 99.4 |
| Example 8 | 1200 | 2 | 95.0 | 1200 | 2 | 200 | 99.4 |
| Example 9 | 1200 | 2 | 98.0 | 1200 | 2 | 150 | 99.3 |
| Example 10 | 1200 | 2 | 95.2 | 1200 | 2 | 200 | 99.3 |
| Example 11 | 1200 | 2 | 98.9 | 1200 | 2 | 200 | 99.3 |
| Example 12 | 1200 | 2 | 98.8 | 1200 | 2 | 200 | 99.3 |
| Example 13 | 1200 | 2 | 98.4 | 1200 | 2 | 200 | 99.2 |
| Example 14 | 1220 | 2 | 94.5 | 1220 | 2 | 200 | 99.3 |
| Example 15 | 1200 | 2 | 98.2 | 1200 | 2 | 150 | 99.5 |
| Example 16 | 1220 | 2 | 96.5 | 1220 | 2 | 200 | 99.3 |
| Example 17 | 1175 | 2 | 94.5 | 1175 | 2 | 200 | 99.1 |
| Comparative Example 1 | 1200 | 2 | 96.5 | 1200 | 2 | 150 | 99.2 |
| Comparative Example 2 | 1200 | 2 | 90.4 | 1200 | 2 | 150 | 91.6 |
| Comparative Example 3 | 1325 | 2 | 99.2 | - | - | - | - |
| Comparative Example 4 | 1200 | 2 | 96.8 | 1200 | 2 | 150 | 99.2 |
| Comparative Example 5 | 1200 | 2 | 94.2 | - | - | - | - |
| Comparative Example 6 | 1100 | 2 | 88.9 | 1150 | 2 | 150 | 90.1 |

[Table 4]

| | | Calcined body | | | HIP conditions | | | Finally sintered body |
|---|---|---|---|---|---|---|---|---|
| | | Calcination temperature | Calcination time | Relative sintered density of calcined body | Final sintering temperature | Final sintering time | Pressure | Relative sintered density of finally sintered body |
| | | °C | hr | % | °C | hr | MPa | % |
| Example 18 | | 1200 | 2 | 97.7 | 1200 | 2 | 200 | 99.7 |
| Example 19 | | 1200 | 2 | 97.1 | 1200 | 2 | 200 | 99.2 |
| Example 20 | | 1200 | 2 | 98.1 | 1200 | 2 | 200 | 99.7 |
| Example 21 | | 1200 | 2 | 97.6 | 1200 | 2 | 200 | 99.7 |
| Example 22 | | 1200 | 2 | 97.7 | 1200 | 2 | 200 | 99.7 |
| Example 23 | | 1200 | 2 | 97.2 | 1200 | 2 | 200 | 99.3 |
| Example 24 | | 1200 | 2 | 97.8 | 1200 | 2 | 200 | 99.2 |
| Example 25 | | 1200 | 2 | 97.1 | 1200 | 2 | 200 | 99.5 |
| Example 26 | | 1200 | 2 | 96.4 | 1200 | 2 | 200 | 99.3 |

[Average crystal grain diameter]

Using a SEM observation image of a sintered body sample obtained by scanning electron microscopy observation, an average crystal grain diameter was determined. The sample for the SEM observation was prepared in accordance with JIS R 1633. The number of crystal grains per visual field of the SEM observation image was set to 150 or more. A rectangle with an arbitrary size was drawn in the SEM observation image, and the number of grains present on the sides and diagonal lines of the rectangle was counted. The length of each of the sides of the rectangle was set to be equal to or more than 80% of the visual field. The ratio between the vertical and horizontal lengths of the rectangle was set to 1.47 : 1 (horizontal length : vertical length). The average crystal grain diameter was calculated from the numbers of grains and the lengths of four sides and diagonal lines of the rectangle.

Specifically, the average crystal grain diameter was calculated by the following formula.

$$\text{(Average crystal grain diameter)} = \{[X/(x1 + x2)] + [Y/(y1 + y2)] + [D/(d1 + d2)]\} \times 2/3$$

X, x1, x2, Y, y1, y2, D, d1, and d2 in the formula denote the following.

X ($\mu$m): Length of long side of rectangle
Y ($\mu$m): Length of short side of rectangle
D ($\mu$m): Length of diagonal line of rectangle
x1 (number of grains): Number of grains on one of long sides
x2 (number of grains): Number of grains on the other long side
y1 (number of grains): Number of grains on one of short sides
y2 (number of grains): Number of grains on the other short side
d1 (number of grains): Number of grains on one of diagonal lines

d2 (number of grains): Number of grains on the other diagonal line

The same operation was performed for three visual fields at each level, and the average of average crystal grain diameters of the three visual fields was defined as a final average crystal grain diameter.

[Identification of crystal phase]

The X-ray diffraction spectrum of each of the zirconia sintered bodies was obtained using an X-ray diffractometer ("RINT2500" manufactured by Rigaku Corporation). The measurement conditions were as follows.

<Measurement conditions>

| | |
|---|---|
| Measuring device: | X-ray diffractometer (RINT2500, manufactured by Rigaku Corporation) |
| Radiation source: | CuK$\alpha$ radiation source |
| Sampling interval: | 0.02° |
| Scanning speed: | $2\theta$ = 1.0°/min |
| Divergence slit (DS): | 1° |
| Divergence vertical limit slit: | 5 mm |
| Scatter slit (SS): | 1° |
| Receiving slit (RS): | 0.3 mm |
| Monochrome receiving slit: | 0.8 mm |
| Tube voltage: | 50 kV |
| Tube current: | 300 mA |
| Scanning speed: | $2\theta$ = 26 to 36°: 4°/min |
| $2\theta$ = 72 to 76°: | 1°/min |

Then, the crystal phases were identified from the X-ray diffraction spectrum. The phase fractions of the crystal phases contained in the zirconia sintered body were calculated by the following formulae.

Monoclinic phase fraction (%) = (Im(111) + Im(11-1))/(Im(111) + Im(11-1) + It(101) + Ic(111)) $\times$ 100

Tetragonal phase fraction (%) = (100% - monoclinic phase (%)) $\times$ ((It(004) + It(220)/(It(004) + It(220) + Ic(004)) $\times$ 100

Cubic phase fraction (%) = (100% - monoclinic phase (%)) $\times$ ((Ic(004)/(It(004) + It(220) + Ic(004)) $\times$ 100

Here, Im(111) is the diffraction intensity of (111) in the monoclinic phase, and Im(11-1) is the diffraction intensity of (11-1) in the monoclinic phase.
It(101) is the diffraction intensity of (101) in the tetragonal phase, It(220) is the diffraction intensity of (220) in the tetragonal phase, and It(004) is the diffraction intensity of (004) in the tetragonal phase.
Ic(004) is the diffraction intensity of (004) in the cubic phase and Ic(111) is the diffraction intensity of (111) in the cubic phase.
The monoclinic phase of zirconia was discriminated from the tetragonal phase and the cubic phase in the vicinity of $2\theta$ = 26 to 36° in the XRD spectrum. The tetragonal phase was discriminated from the cubic phase in the vicinity of $2\theta$ = 72 to 76° in the XRD spectrum. The cubic phase may be distorted depending on the amount of the stabilizer added and the type of production method used, which may cause a peak position to shift. However, in the present Examples, a peak between (004) and (220) in the tetragonal phase was calculated as the peak of the cubic phase.

[Total light transmittance]

The total light transmittance of the zirconia sintered body of each of Examples and Comparative Examples was measured by a method in accordance with JIS K 7361 using a spectral haze meter (device name: SH-7000, manufactured by Nippon Denshoku Industries Co., Ltd.) and a D65 light source. The measurement sample was polished on both sides, whereby the thickness was adjusted to 1 mm. The results are shown in Tables 5 and 6.

[Parallel light transmittance]

The parallel light transmittance of the zirconia sintered body of each of Examples and Comparative Examples was calculated by the following formula from the total light transmittance obtained in accordance with JIS K 7361-1 and the diffusion transmittance Td described in JIS K 7136:2000.

[Parallel light transmittance (%)] = [total light transmittance (%)] - [diffusion transmittance Td (%)]

Here, [diffusion transmittance Td (%)] is a value calculated by [total light transmittance (%)] $\times$ [haze (%)] $\times$ $100^{-1}$. [Haze (%)] was measured in accordance with JIS K 7136:2000.
The measurement sample was polished on both sides, whereby the thickness was adjusted to 1 mm. The results are shown in Tables 5 and 6.

[Monoclinic phase fraction after hydrothermal treatment at 134°C and 0.3 MPa for 75 hours]

First, the zirconia sintered body of each of Examples and Comparative Examples was subjected to hydrothermal treatment at 134°C and an absolute pressure of 0.3 MPa (in an underwater environment) for 75 hours. Then, the fraction of the monoclinic phase contained in the crystal phase of the zirconia sintered body after hydrothermal treatment was determined. The monoclinic phase fraction of the zirconia sintered body after hydrothermal treatment was determined in the same manner as described in the section of [Identification of crystal phase]. The results are shown in Tables 5 and 6.

[Three-point bending strength]

The three-point bending strength of the zirconia sintered body of each of Examples and Comparative Examples obtained above was measured in accordance with three-point bending strength specified in JIS R 1601. The results are shown in Tables 5 and 6.

[Toughness]

The toughness measurement by an IF method was performed by a method in accordance with JIS R 1607 (Testing methods for fracture toughness of fine ceramics at room temperature) with a load with which an indentation can be formed and which is largest within 30 kgf (294.2 N).
More specifically, the load used was a maximum load which is 30 kgf or less at which an indentation is formed with the proviso that the periphery of the indentation is not broken. For example, when an attempt was made to measure the zirconia sintered body of Example 9 under a load of 30 kgf, the load was excessively large, so that the periphery of the indentation was broken, and thus the toughness value could not be measured. Then, as a result of reducing the load, the periphery of the indentation was not broken at 5 kgf. Therefore, in Example 9, the measurement was performed with a load set to 5 kgf.
The load was determined by a similar method.
The load of Example 1, Example 16, and Comparative Example 1 was 30 kgf;

the load of Examples 2 to 8, 11, 14, 15, 18, and 20 to 26, and Comparative Examples 2, 3, 5, and 6 was 10 kgf; and
the load of Examples 9, 10, 13, 17, and 19, and Comparative Examples 4 and 5 was 5 kgf.

Seven quadrangular indentations formed with a Vickers hardness tester were selected to determine toughness values, and the average of five toughness values resulting from exclusion of the minimum and maximum values was defined as a toughness value. Indentations from which cracks did not extend were not used for the measurement, and quadrangular indentations having four tips from which cracks extended were used.
The toughness values were each calculated by the following formula.

$$Kc = 0.018 \times Hv \times a^{0.5} \times [(c - a)/a]^{-0.5} \times (Hv/E)^{-0.4}$$

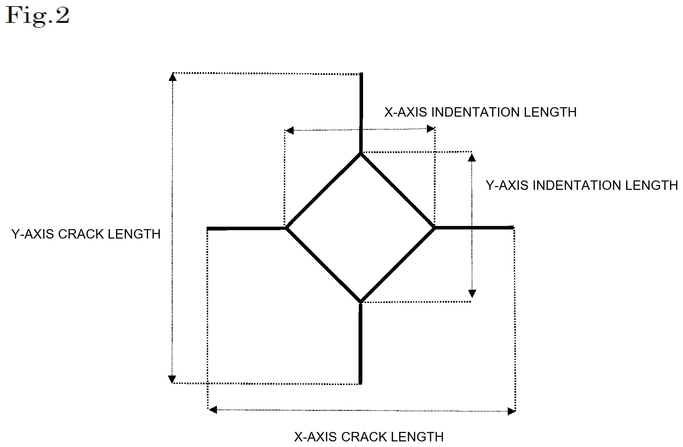

Kc, Hv, a, c, and E mean the following. The indentation lengths along the X and Y axes and the crack lengths along the X and Y axes for determining a and c are as shown in Fig. 2.

**EP 4 786 439 A1**

Kc: Toughness value [MPa•m$^{0.5}$]
Hv: Vickers hardness [GPa]
a: Half of average of indentation lengths along X and Y axes [μm]
c: Half of average of crack lengths along X and Y axes [um]
E: Young's modulus [GPa]

The Vickers hardness was determined in accordance with JIS R 1610 (Test methods for hardness of fine ceramics). The Vickers hardness was calculated by the following formula.

$$Hv = 0.001854 \times [F/d^2 Sv]$$

F and d mean the following. The X-axis indentation length and the Y-axis indentation length for determining d are as shown in Fig. 2.

Hv: Vickers hardness [GPa]
F: Test force [N]
d: Average [mm] of X-axis indentation length and Y-axis indentation length

As the Young's modulus, 210 GPa, which is known as a Young's modulus of common yttria-stabilized zirconia, was used.

[Table 5]

| | Average crystal grain diameter | Sintered body | | | | | | | | |
| | | Monoclinic phase | Tetragonal crystal phase | Cubic phase | Total light transmittance | Parallel light transmittance | Hydrothermal degradation at 134°C for 75 hours | Bending strength | Toughness value |
| | nm | % | % | % | % | % | % | MPa | MPa·m$^{0.5}$ |
| Example 1 | 55 | 0.0 | 97.0 | 3.0 | 41.2 | 2.3 | 0.8 | 1000 | 7.5 |
| Example 2 | 67 | 0.0 | 93.0 | 7.0 | 44.1 | 6.5 | 0.2 | 900 | 6.0 |
| Example 3 | 62 | 0.3 | 93.6 | 6.1 | 45.0 | 7.7 | 0.3 | 900 | 6.4 |
| Example 4 | 77 | 0.0 | 85.0 | 15.0 | 41.1 | 2.3 | 0.2 | 800 | 4.9 |
| Example 5-1 | 75 | 0.0 | 85.5 | 14.5 | 46.8 | 10.4 | 0.0 | 800 | 4.2 |
| Example 5-2 | 79 | 0.1 | 84.3 | 15.6 | 44.7 | 8.8 | 0.2 | 800 | 4.5 |
| Example 6-1 | 58 | 0.2 | 85.2 | 14.6 | 45.0 | 11.3 | 0.3 | 800 | 4.8 |
| Example 6-2 | 53 | 0.2 | 86.1 | 13.7 | 46.9 | 10.4 | 0.3 | 800 | 4.0 |
| Example 6-3 | 66 | 0.4 | 84.2 | 15.4 | 46.5 | 7.7 | 0.5 | 850 | 4.5 |
| Example 7-1 | 66 | 0.0 | 60.4 | 39.6 | 45.0 | 6.0 | 0.2 | 600 | 3.6 |
| Example 7-2 | 71 | 0.0 | 57.3 | 42.7 | 47.4 | 11.7 | 0.1 | 500 | 3.9 |
| Example 8 | 67 | 0.0 | 60.0 | 40.0 | 44.7 | 5.1 | 0.1 | 500 | 3.8 |
| Example 9 | 88 | 0.0 | 24.3 | 75.7 | 46.3 | 3.1 | 0.1 | 350 | 3.1 |
| Example 10 | 87 | 0.0 | 25.0 | 75.0 | 44.7 | 2.3 | 0.1 | 350 | 3.2 |
| Example 11 | 70 | 0.1 | 54.0 | 45.9 | 46.5 | 8.5 | 0.1 | 450 | 4.6 |
| Example 12 | 83 | 0.1 | 38.1 | 61.8 | 48.2 | 12.3 | 0.2 | 400 | 4.0 |
| Example 13 | 90 | 0.2 | 21.9 | 77.9 | 47.9 | 11.1 | 0.2 | 350 | 3.4 |
| Example 14 | 77 | 0.0 | 53.2 | 46.8 | 48.4 | 12.8 | 0.1 | 500 | 4.1 |
| Example 15 | 62 | 0.1 | 83.2 | 16.7 | 43.6 | 3.6 | 0.0 | 780 | 4.9 |
| Example 16 | 64 | 0.5 | 96.5 | 3.0 | 40.9 | 1.7 | 0.9 | 1000 | 8.8 |
| Example 17 | 87 | 0.0 | 20.1 | 79.9 | 43.0 | 2.5 | 0.0 | 320 | 3.2 |
| Comparative Example 1 | 62 | 1.2 | 97.1 | 1.7 | 38.2 | 0.8 | 2.2 | 1000 | 9.0 |

(continued)

| | Sintered body | | | | | | | | |
|---|---|---|---|---|---|---|---|---|---|
| | Average crystal grain diameter | Monoclinic phase | Tetragonal crystal phase | Cubic phase | Total light transmit tance | Parallel light transmit tance | Hydrothermal degradation at 134°C for 75 hours | Bending strength | Toughness value |
| | nm | % | % | % | % | % | % | MPa | $MPa \cdot m^{0.5}$ |
| Comparative Example 2 | 72 | 5.2 | 94.8 | 0.0 | 4.5 | 0.0 | 5.5 | 450 | 3.0 |
| Comparative Example 3 | 146 | 0.0 | 13.9 | 86.1 | 40.0 | 0.6 | 0.1 | 400 | 4.5 |
| Comparative Example 4 | 205 | 0.0 | 5.0 | 95.0 | 46.2 | 0.8 | 0.0 | 200 | 3.2 |
| Comparative Example 5 | 64 | 0.0 | 94.5 | 5.5 | 2.1 | 0.0 | 0.2 | 500 | 5.1 |
| Comparative Example 6 | 52 | 10.2 | 88.2 | 1.6 | 1.5 | 0.0 | 10.3 | 300 | 3.0 |

[Table 6]

| | Sintered body | | | | | | | | |
|---|---|---|---|---|---|---|---|---|---|
| | Average crystal grain diameter | Monoclinic phase | Tetragonal crystal phase | Cubic phase | Total light transmittance | Parallel light transmittance | Hydrothermal degradation at 134°C for 75 hours | Bending strength | Toughness value |
| | nm | % | % | % | % | % | % | MPa | MPa·m$^{0.5}$ |
| Example 18 | 72 | 0.1 | 80.9 | 19.0 | 46.5 | 2.3 | 0.1 | 540 | 4.2 |
| Example 19 | 83 | 0.0 | 22.0 | 78.0 | 44.5 | 3.4 | 0.0 | 440 | 3.1 |
| Example 20 | 77 | 0.1 | 85.8 | 14.1 | 43.5 | 5.8 | 0.1 | 730 | 3.4 |
| Example 21 | 80 | 0.1 | 88.0 | 11.9 | 44.8 | 6.1 | 0.1 | 760 | 4.7 |
| Example 22 | 83 | 0.1 | 89.0 | 10.9 | 45.2 | 7.0 | 0.1 | 770 | 4.6 |
| Example 23 | 72 | 0.0 | 65.3 | 34.7 | 41.2 | 1.6 | 0.1 | 660 | 3.6 |
| Example 24 | 68 | 0.0 | 77.7 | 22.3 | 43.2 | 2.4 | 0.0 | 700 | 3.7 |
| Example 25 | 70 | 0.1 | 87.5 | 12.4 | 42.0 | 4.5 | 0.1 | 770 | 4.3 |
| Example 26 | 75 | 0.0 | 60.9 | 39.1 | 45.6 | 4.9 | 0.0 | 600 | 3.5 |

**Claims**

1. A zirconia sintered body comprising stabilized zirconia containing zirconia and a stabilizer, wherein

the stabilizer contains CaO,
a content of the CaO in the stabilized zirconia is 4.5 mol% or more and 12 mol% or less in terms of oxide, and
the zirconia sintered body has:

an average crystal grain diameter of 90 nm or less,
a monoclinic phase fraction of 2% or less,
a tetragonal phase fraction of 20% or more and 97% or less,
a cubic phase fraction of 3% or more and 80% or less, and
a relative sintered density of 99% or more.

2. The zirconia sintered body according to claim 1, wherein $Al_2O_3$ is contained in an amount of 0.40 mass% or less relative to an entire amount of the zirconia sintered body.

3. The zirconia sintered body according to claim 1 or 2, which has a total light transmittance at a thickness of 1 mm of 40% or more and 50% or less.

4. The zirconia sintered body according to claim 1 or 2, which has a parallel light transmittance at a thickness of 1 mm of 1% or more and 15% or less.

5. The zirconia sintered body according to claim 1 or 2, which has a three-point bending strength of 300 MPa or more and 1500 MPa or less.

6. The zirconia sintered body according to claim 1 or 2, which has a toughness value as measured by an IF method of 3 $MPa \cdot m^{0.5}$ or more and 15 $MPa \cdot m^{0.5}$ or less.

7. A method for producing the zirconia sintered body according to claim 1 or 2, the method comprising:

step A of molding a zirconia powder with a pressure of 1.0 $t/cm^2$ or more and 2.5 $t/cm^2$ or less to obtain a molded body;
step B of pre-sintering the molded body under ordinary pressure at 1150°C or higher and 1250°C or lower for 1 hour or more and 5 hours or less to obtain a pre-sintered body; and
step C of finally sintering the pre-sintered body under a pressure of 50 MPa or more and 200 MPa or less at 1150°C or higher and 1250°C or lower for 1 hour or more and 5 hours or less to obtain a sintered body.

8. The method for producing the zirconia sintered body according to claim 7, wherein

the zirconia powder contains stabilized zirconia containing zirconia and a stabilizer,
the stabilizer contains CaO, and
a content of the CaO in the stabilized zirconia is 4.5 mol% or more and 12 mol% or less in terms of oxide,
the zirconia powder has:

a specific surface area of 20 $m^2/g$ or more and 80 $m^2/g$ or less, and
a peak top diameter of 20 nm or more and 100 nm or less in a pore volume distribution in a range of 10 nm or more and 200 nm or less in a pore distribution based on a mercury intrusion method, and
when the zirconia powder is molded with a pressure of 2.0 $t/cm^2$ using cold isostatic pressing, a relative molding density of 40% or more and 48% or less is attained.

9. The method for producing the zirconia sintered body according to claim 8, wherein the zirconia powder contains $Al_2O_3$ within a range of 0.40 mass% or less relative to an entire amount of the zirconia powder.

10. A zirconia powder to be used for the method for producing the zirconia sintered body according to claim 7,

comprising stabilized zirconia containing zirconia and a stabilizer, wherein
the stabilizer contains CaO, and

a content of the CaO in the stabilized zirconia is 4.5 mol% or more and 12 mol% or less in terms of oxide, the zirconia powder has:

a specific surface area of 20 $m^2$/g or more and 80 $m^2$/g or less, and
a peak top diameter of 20 nm or more and 100 nm or less in a pore volume distribution in a range of 10 nm or more and 200 nm or less in a pore distribution based on a mercury intrusion method, and
when the zirconia powder is molded with a pressure of 2.0 $t/cm^2$ using cold isostatic pressing, a relative molding density of 40% or more and 48% or less is attained.

11. The zirconia powder according to claim 10, wherein the zirconia powder contains $Al_2O_3$ within a range of 0.40 mass% or less relative to an entire amount of the zirconia powder.

12. The zirconia sintered body according to claim 1 or 2, wherein

the stabilizer further contains another stabilizer other than CaO,
the other stabilizer is one or more selected from the group consisting of $YO_{1.5}$, $YbO_{1.5}$, $ErO_{1.5}$, $CeO_2$, $NdO_{1.5}$, $LaO_{1.5}$, and $TbO_{1.5}$, and
a content of the other stabilizer in the stabilized zirconia is 0.01 mol% or more and 6.0 mol% or less in terms of oxide.

Fig.1

Fig.2

## INTERNATIONAL SEARCH REPORT

| International application No. |
|---|
| **PCT/JP2024/033652** |

| | |
|---|---|
| **A.** | **CLASSIFICATION OF SUBJECT MATTER** |

*C04B 35/486*(2006.01)i; *C01G 25/00*(2006.01)i; *C01G 25/02*(2006.01)i
FI:   C04B35/486; C01G25/00; C01G25/02

According to International Patent Classification (IPC) or to both national classification and IPC

| | |
|---|---|
| **B.** | **FIELDS SEARCHED** |

Minimum documentation searched (classification system followed by classification symbols)

C04B35/486; C01G25/00; C01G25/02; A61K6/818

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

| | |
|---|---|
| **C.** | **DOCUMENTS CONSIDERED TO BE RELEVANT** |

| Category* | Citation of document, with indication, where appropriate, of the relevant passages | Relevant to claim No. |
|---|---|---|
| A | WO 2022/075345 A1 (DAIICHI KIGENSO KAGAKU KOGYO CO., LTD.) 14 April 2022 (2022-04-14)<br>entire text, all drawings | 1-12 |
| A | JP 2000-169222 A (DAIICHI KIGENSO KAGAKU KOGYO CO., LTD.) 20 June 2000 (2000-06-20)<br>entire text, all drawings | 1-12 |
| A | JP 2021-014390 A (NGK SPARK PLUG CO., LTD.) 12 February 2021 (2021-02-12)<br>entire text, all drawings | 1-12 |
| A | WO 2022/138592 A1 (KURARAY NORITAKE DENTAL INC.) 30 June 2022 (2022-06-30)<br>entire text, all drawings | 1-12 |
| A | WO 2023/127559 A1 (KURARAY NORITAKE DENTAL INC.) 06 July 2023 (2023-07-06)<br>entire text, all drawings | 1-12 |

| | | | |
|---|---|---|---|
| ✓ Further documents are listed in the continuation of Box C. | | ✓ See patent family annex. | |

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **24 October 2024** | **05 November 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

**EP 4 786 439 A1**

**INTERNATIONAL SEARCH REPORT**

International application No.

**PCT/JP2024/033652**

**C.     DOCUMENTS CONSIDERED TO BE RELEVANT**

| Category* | Citation of document, with indication, where appropriate, of the relevant passages | Relevant to claim No. |
|---|---|---|
| A | WO 2022/075346 A1 (DAIICHI KIGENSO KAGAKU KOGYO CO., LTD.) 14 April 2022 (2022-04-14)<br>entire text, all drawings | 1-12 |
| A | JP 2014-181136 A (NITSUKATOO K.K.) 29 September 2014 (2014-09-29)<br>entire text, all drawings | 1-12 |

Form PCT/ISA/210 (second sheet) (July 2022)

44

## INTERNATIONAL SEARCH REPORT
### Information on patent family members

International application No.

**PCT/JP2024/033652**

| Patent document cited in search report | | | Publication date (day/month/year) | Patent family member(s) | | | Publication date (day/month/year) |
|---|---|---|---|---|---|---|---|
| WO | 2022/075345 | A1 | 14 April 2022 | US entire text, all drawings EP entire text, all drawings CN | 2022/0380258 4039647 114787086 | A1 A1 A | |
| JP | 2000-169222 | A | 20 June 2000 | (Family: none) | | | |
| JP | 2021-014390 | A | 12 February 2021 | (Family: none) | | | |
| WO | 2022/138592 | A1 | 30 June 2022 | US entire text, all drawings EP entire text, all drawings CN KR | 2024/0033186 4265584 116744877 10-2023-0122004 | A1 A1 A A | |
| WO | 2023/127559 | A1 | 06 July 2023 | (Family: none) | | | |
| WO | 2022/075346 | A1 | 14 April 2022 | US entire text, all drawings EP entire text, all drawings CN | 2022/0380261 4039648 114787085 | A1 A1 A | |
| JP | 2014-181136 | A | 29 September 2014 | (Family: none) | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2022075345 A

**Non-patent literature cited in the description**

- **Y. ZHANG**. Dent Mater.. THE JOURNAL OF JAPANESE SOCIETY FOR DENTAL MATERIALS AND DEVICES, 2014, vol. 30, 1195-1203